(19) Europäisches Patentamt / European Patent Office / Office européen des brevets

(11) **EP 4 349 078 B1**

(12) **EUROPEAN PATENT SPECIFICATION**

(45) Date of publication and mention
of the grant of the patent:
**06.08.2025   Bulletin 2025/32**

(21) Application number: **22732808.5**

(22) Date of filing: **26.05.2022**

(51) International Patent Classification (IPC):
*H02J 50/00* *(2016.01)*

(52) Cooperative Patent Classification (CPC):
**H04W 52/0216; H02J 50/001; H04W 52/0235;**
Y02D 30/70

(86) International application number:
**PCT/US2022/031188**

(87) International publication number:
**WO 2022/251535 (01.12.2022 Gazette 2022/48)**

(54) **WAKING-UP A WIRELESSLY-POWERED DEVICE**

AUFWECKEN EINER DRAHTLOS BETRIEBENEN VORRICHTUNG

RÉVEIL D'UN DISPOSITIF ALIMENTÉ SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **26.05.2021   GR 20210100347**

(43) Date of publication of application:
**10.04.2024   Bulletin 2024/15**

(73) Proprietor: **QUALCOMM INCORPORATED**
San Diego, California 92121-1714 (US)

(72) Inventors:
• **ELSHAFIE, Ahmed**
  **San Diego, California 92121-1714 (US)**
• **AKKARAKARAN, Sony**
  **San Diego, California 92121-1714 (US)**
• **MANOLAKOS, Alexandros**
  **San Diego, California 92121-1714 (US)**
• **HOSSEINI, Seyedkianoush**
  **San Diego, California 92121-1714 (US)**
• **ABDELGHAFFAR, Muhammad Sayed Khairy**
  **San Diego, California 92121-1714 (US)**
• **XU, Huilin**
  **San Diego, California 92121-1714 (US)**
• **KIM, Yuchul**
  **San Diego, California 92121-1714 (US)**
• **CHEN, Wanshi**
  **San Diego, California 92121-1714 (US)**

(74) Representative: **Jaeger, Michael David**
**Maucher Jenkins**
**Seventh Floor Offices**
**Artillery House**
**11-19 Artillery Row**
**London SW1P 1RT (GB)**

(56) References cited:
**WO-A1-2019/108940      US-A1- 2020 037 247**

• **INTERDIGITAL ET AL: "Air-Interfaces for Ultra-Low Power Communications –; Challenges, Solutions and Potential Benefits", 1 March 2019 (2019-03-01), XP055682431, Retrieved from the Internet <URL:www.interdigital.com> [retrieved on 20200402]**

## Description

### FIELD OF TECHNOLOGY

The following relates to wireless communications, including waking-up a wirelessly-powered device.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

A UE may communicate with another UE or a base station. In some examples, the UE may perform discontinuous reception (DRX), which may include an on duration during which the UE may monitor a control channel for a signal. Efficient use of the on duration may present challenges.

US 2020/037247 A1 discusses a UE that attempts to detect a wake-up signal transmitted from a base station and directed to the UE prior to an ON duration in a discontinuous reception (DRX) cycle. WO 2019/108940 A1 discusses a wireless transmit/receive unit with one or more antennas and a transceiver that may be configured to extract energy from a signal.

### SUMMARY

The invention is defined by the independent claims. Advantageous embodiments are set out in the dependent claims. The described techniques relate to improved methods, systems, devices, and apparatuses that support waking-up a wirelessly-powered device. Generally, the described techniques provide for a first user equipment (UE) to determine whether to harvest energy from a signal, decode data from the signal, or both. For instance, a wireless device (e.g., a base station, a second UE) may transmit a wake-up message including an indicator of whether an on duration of a discontinuous reception cycle is associated with harvesting energy from a signal transmitted during the on duration. The wireless device may transmit the signal during the on duration based on the wake-up message. In some examples, the first UE may determine, from the indicator, whether to harvest energy, decode data or both during the on duration. If both harvesting energy and decoding data, the UE may harvest the energy and decode the data concurrently for at least a portion of the on duration. Additionally, or alternatively, the UE may harvest energy during a first portion of the on duration and may decode data during a second portion of the on duration.

A method for wireless communication at a user equipment (UE) is described. The method may include receiving a wake-up message including an indicator of whether an on duration of a discontinuous reception cycle is associated with harvesting energy from a signal transmitted during the on duration and receiving the signal during the on duration based on the wake-up message.

An apparatus for wireless communication at a UE is described. The apparatus may include one or more processors, memory coupled with the one or more processors, and instructions stored in the memory. The instructions may be executable by the one or more processors to cause the apparatus to obtain a wake-up message including an indicator of whether an on duration of a discontinuous reception cycle is associated with harvesting energy from a signal transmitted during the on duration and obtain the signal during the on duration based on the wake-up message.

A method for wireless communication at a wireless device is described. The method may include transmitting, to a UE, a wake-up message including an indicator of whether an on duration of a discontinuous reception cycle is associated with harvesting energy from a signal transmitted in the on duration and transmitting the signal during the on duration based on transmitting the wake-up message.

An apparatus for wireless communication at a wireless device is described. The apparatus may include one or more processors, memory coupled with the one or more processors, and instructions stored in the memory. The instructions may be executable by the one or more processors to cause the apparatus to output for transmission, to a UE, a wake-up message including an indicator of whether an on duration of a discontinuous reception cycle is associated with harvesting energy from a signal transmitted in the on duration and output for transmission the signal during the on duration based on transmitting the wake-up message.

### BRIEF DESCRIPTION OF THE DRAWINGS

FIG. 1 illustrates an example of a wireless communications system that supports waking-up a wirelessly-powered device in accordance with aspects of the present disclosure.

FIG. 2 illustrates an example of a wireless communications system that supports waking-up a wirelessly-powered device in accordance with aspects of the present disclosure.

FIGs. 3A, 3B, and 3C illustrate examples of architectures that support waking-up a wirelessly-powered device in accordance with aspects of the present disclosure.

FIGs. 4A, 4B, and 4C illustrate examples of communication schemes that support waking-up a wirelessly-powered device in accordance with aspects of the present disclosure.

FIG. 5 illustrates an example of a process flow that supports waking-up a wirelessly-powered device in accordance with aspects of the present disclosure.

FIGs. 6 and 7 show block diagrams of devices that support waking-up a wirelessly-powered device in accordance with aspects of the present disclosure.

FIG. 8 shows a block diagram of a communications manager that supports waking-up a wirelessly-powered device in accordance with aspects of the present disclosure.

FIG. 9 shows a diagram of a system including a device that supports waking-up a wirelessly-powered device in accordance with aspects of the present disclosure.

FIGs. 10 and 11 show block diagrams of devices that support waking-up a wirelessly-powered device in accordance with aspects of the present disclosure.

FIG. 12 shows a block diagram of a communications manager that supports waking-up a wirelessly-powered device in accordance with aspects of the present disclosure.

FIG. 13 shows a diagram of a system including a device that supports waking-up a wirelessly-powered device in accordance with aspects of the present disclosure.

FIGs. 14 through 18 show flowcharts illustrating methods that support waking-up a wirelessly-powered device in accordance with aspects of the present disclosure.

DETAILED DESCRIPTION

A user equipment (UE) may communicate with a wireless device, such as a base station or another UE. In some examples, the UE may monitor a channel (e.g., a control channel) continuously. However, monitoring the channel continuously may be associated with a higher energy usage by the UE than refraining from monitoring the channel. To enable the UE to use less energy when monitoring the channel, the UE may perform discontinuous reception (DRX), which may include the UE switching between an active state (e.g., a state in which the UE monitors one or more channels for communications with the wireless device) during an on duration and an inactive state (e.g., a state in which the UE refrains from monitoring the one or more channels) during an off duration. Accordingly, the UE may receive a signal over monitored channels from the wireless device during the on duration and may not receive a signal over the monitored channels during the off duration.

In some examples, one on duration and one consecutive off duration may form a DRX cycle. In some examples, the on duration may be a duration during which the UE is in an active state and may be capable of monitoring a channel and the off duration may be a duration during which the UE is in an inactive state and incapable of monitoring the channel. In some examples, the UE may determine whether to switch to an active state during an on duration based on whether the UE receives a wake-up signal (WUS) prior to the on duration. For instance, if the UE receives the WUS prior to the on duration, the UE may switch to the active state during a next on duration. However, if the UE does not receive the WUS prior to the on duration, the UE may remain in the inactive state.

In some examples, the UE may be capable of harvesting energy from a signal, decoding data from a signal, or both. The methods of the present disclosure describe how the UE may determine whether to harvest energy, decode data, or both from a signal received during an on duration of DRX operation. For instance, a WUS received by the UE may indicate whether the UE is to harvest energy, decode data, or both during an on duration. In some examples, the WUS may indicate that the UE is to harvest energy and decode data concurrently during the on duration. In some examples, the WUS may indicate that the UE is to harvest energy during a first portion of the on duration and to decode data during a second portion of the on duration. Additionally, or alternatively, if the UE fails to receive a WUS, the UE may determine whether to remain inactive, harvest energy, decode data, or harvest energy and decode data during an on duration according to a set of parameters (e.g., one or more predetermined rules or a set of parameters that correspond to probability values).

Aspects of the disclosure are initially described in the context of wireless communications systems. Additional aspects of the disclosure are described in the context of architectures, communication schemes, and a process flow. Aspects of the disclosure are further illustrated by and described with reference to apparatus diagrams, system diagrams, and flowcharts that relate to waking-up a wirelessly-powered device.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

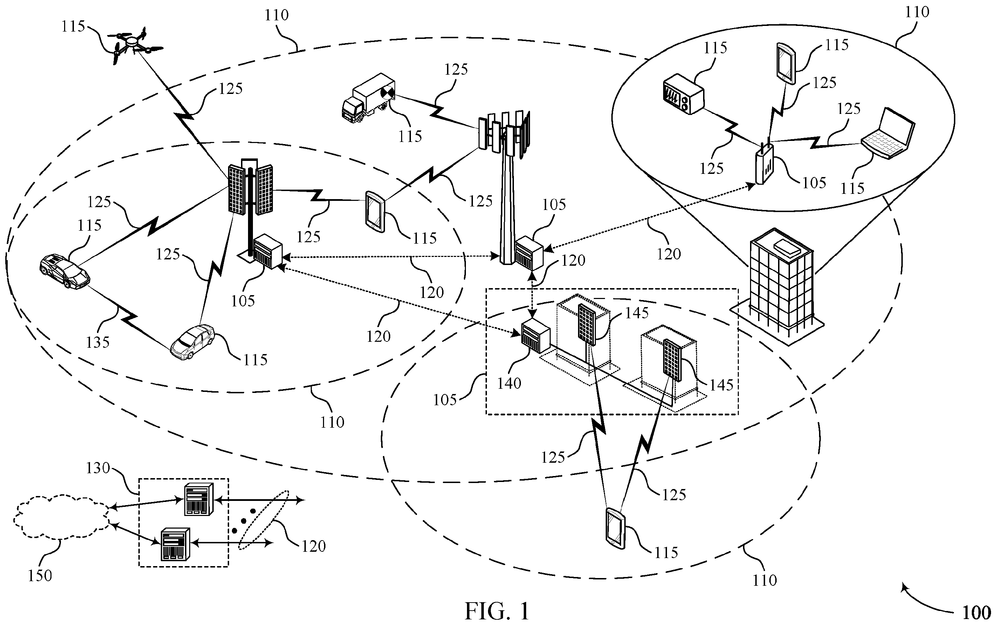

**FIG. 1** illustrates an example of a wireless communications system 100 that supports waking-up a wirelessly-powered device in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing ($\Delta f$) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of $T_s = 1/(\Delta f_{max} \cdot N_f)$ seconds, where $\Delta f_{max}$ may represent the maximum supported subcarrier spacing, and $N_f$ may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., $N_f$) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, including frequency bands in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally, or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

A UE 115 may communicate with a wireless device, such as a base station 105 or another UE. In some examples, the UE 115 may monitor a channel (e.g., a control channel) continuously. However, monitoring the channel continuously may be associated with a higher energy usage by the UE 115 than refraining from monitoring the channel. To enable the UE 115 to use less energy when monitoring the channel, the UE 115 may perform DRX, which may include the UE 115 switching between an active state (e.g., a state in which the UE 115 monitors one or more channels for communications with the wireless device) during an on duration and an inactive state (e.g., a state in which the UE 115 refrains from monitoring the one or more channels) during an off duration. Accordingly, the UE 115 may receive a signal over monitored channels from the wireless device during the on duration and may not receive a signal over the monitored channels during the off duration.

In some examples, one on duration and one consecutive off duration may form a DRX cycle. In some examples, the on duration may be a duration during which the UE 115 may be in an active state and capable of monitoring a channel and the off duration may be a duration during which the UE 115 is in an inactive state and incapable of monitoring the channel. In some examples, the UE 115 may determine whether to switch to an active state during an on duration based on whether the UE 115 receives a WUS prior to the on duration. For instance, if the UE 115 receives the WUS prior to the on duration, the UE 115 may switch to the active state during a next on duration. However, if the UE 115 does not receive the WUS prior to the on duration, the UE 115 may remain in the inactive state.

In some examples, the UE 115 may be capable of harvesting energy from a signal, decoding data from a signal, or both. The methods of the present disclosure describe how the UE 115 may determine whether to harvest energy, decode data, or both from a signal received during an on duration of DRX operation. For instance, a WUS received by the UE 115 may indicate whether the UE 115 is to harvest energy, decode data, or both during an on duration. In some examples, the WUS may indicate that the UE 115 is to harvest energy and decode data concurrently during the on duration. In some examples, the WUS may indicate that the UE 115 is to harvest energy during a first portion of the on duration and to decode data during a second portion of the on duration. Additionally, or alternatively, if the UE 115 fails to receive a WUS, the UE 115 may determine whether to remain inactive, harvest energy, decode data, or harvest energy and decode data during an on duration according to a set of parameters (e.g., one or more predetermined rules or a set of parameters that correspond to probability values).

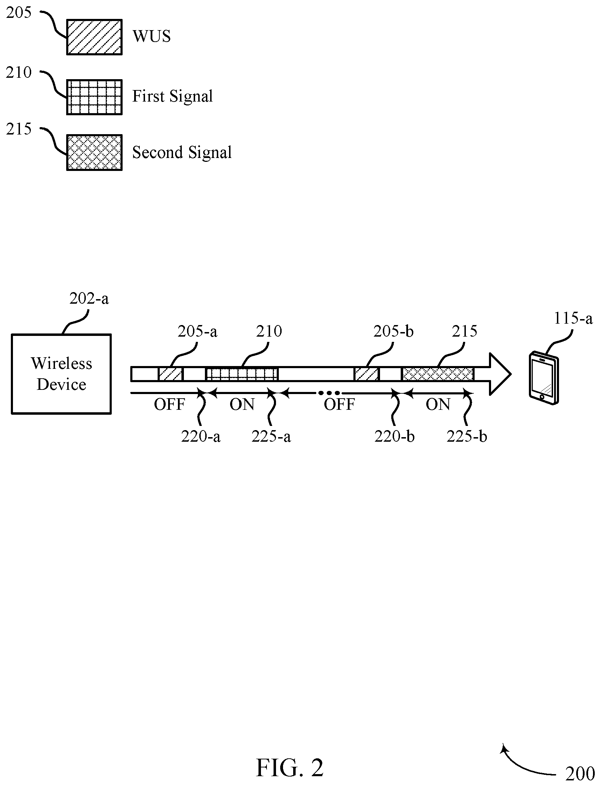

FIG. 2 illustrates an example of a wireless communications system 200 that supports waking-up a wirelessly-powered device in accordance with aspects of the present disclosure. In some examples, wireless communications system 200 may implement one or more aspects of wireless communications system 100. For instance, wireless device 202-a may be an example of a UE 115 or a base station 105 as described with reference to FIG. 1 and UE 115-a may be an example of a UE 115 as described with reference to FIG. 1.

Wireless device 202-a may communicate with UE 115-a according to a DRX cycle. For instance, UE 115-a may be configured with an on duration 225 (e.g., on duration 225-a, 225-b) during which UE 115-a may communicate with wireless device 202-a and an off duration 220 (e.g., off duration 220-a, 220-b) during which UE 115-a may refrain from performing at least some types of communications with wireless device 202-a. In some examples, UE 115-a may determine whether to communicate with wireless device 202-a during an on duration 225 based on whether UE 115-a receives a WUS 205 during a corresponding off duration 220. For instance, if UE 115-a receives WUS 205-a during off duration 220-a, UE 115-a may switch to an active state for on duration 225-a and, if UE 115-a receives WUS 205-b during off duration 220-b, UE 115-a may switch to an active state for on duration 225-b. During the on duration 225, UE 115-a may receive a signal from wireless device 202-a. For instance, if UE 115-a is active during on duration 225-a, UE 115-a may receive first signal 210 from wireless device 202-a. Additionally, if UE 115-a is active during on duration 225-b, UE 115-a may receive second signal 215 from wireless device 202-a. In some examples, the DRX cycle may be an example of connected mode DRX (CDRX). In some examples, a configuration of the WUS 205 may be configured via RRC signaling (e.g., from wireless device 202-a or from another device).

In some examples, UE 115-a may be capable of harvesting energy, decoding data, or both from the first signal 210 or the second signal 215. In some examples, UE 115-a may harvest energy to aid in data decoding, data reception, data encoding, data transmission, or any combination thereof. In some examples, energy harvesting may prolong a battery lifetime of UE 115-a. Additionally, wirelessly powering UE 115-a may enable multiple UEs 115 to cooperate and to relay the signals of other UEs 115. Based on a WUS 205 (e.g., after receiving a WUS 205), UE 115-a may prepare its data chain, its energy harvester circuit, or both.

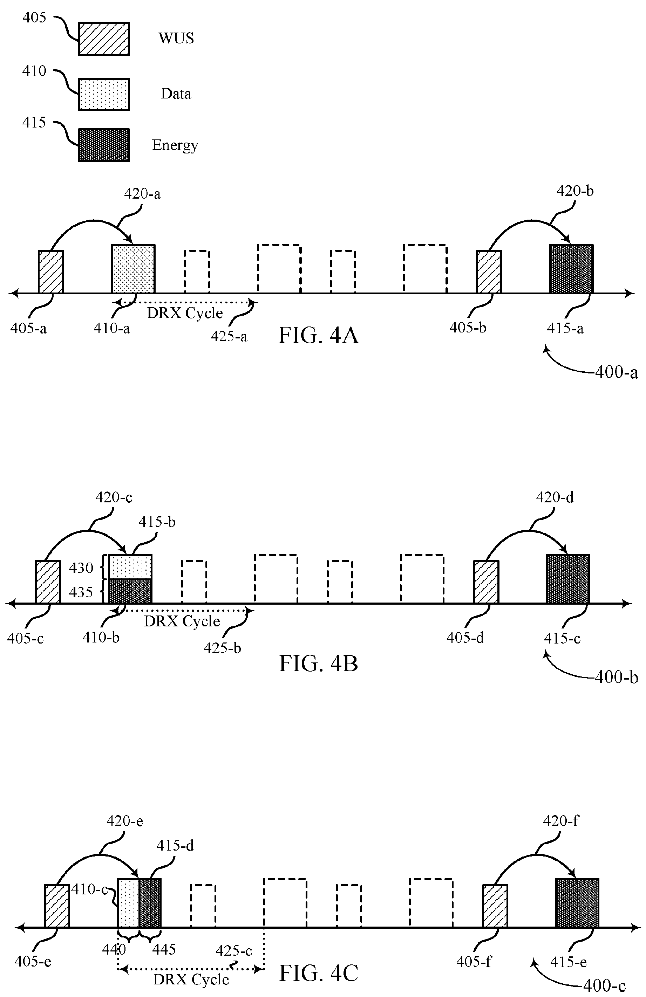

The present disclosure may describe methods that enable UE 115-a to determine whether to harvest energy, decode data, or both from the first signal 210 or the second signal 215. For instance, each WUS 205 may indicate whether UE 115-a is to use a corresponding on duration 225 for harvesting energy, decoding data, or both. In some examples, each WUS 205 may indicate to either harvest energy or decode data (e.g., not both). For instance, WUS 205-a may indicate to harvest energy from first signal 210, and WUS 205-b may indicate to decode data from second signal 215. Additional details may be described herein, for instance, with reference to FIG. 4A. Alternatively, each WUS 205 may indicate to harvest energy, decode data, or both. For instance, WUS 205-a may indicate to harvest energy from first signal 210 and WUS 205-b may indicate to harvest energy and decode data from second signal 215.

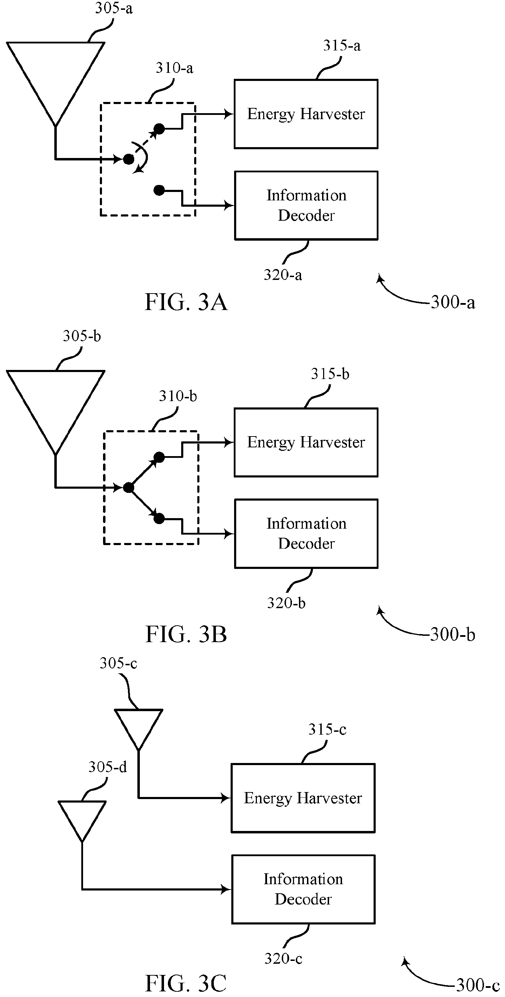

In some examples in which a WUS 205 indicates to harvest energy and decode data, the WUS 205 may indicate to harvest energy and decode data concurrently for at least a portion of the on duration 225 (e.g., for the entire on duration). In some such examples, the WUS 205 may indicate a parameter $\rho$ to denote a fraction of energy of the received signal that UE 115-a is to harvest or that UE 115-a is to use for decoding. In some examples, harvesting energy and decoding concurrently may be associated with a power-splitting architecture as described herein, for instance, with reference to FIG. 3B. Additional details may be described herein, for instance, with reference to FIG. 4B.

In other examples in which a WUS 205 indicates to harvest energy and decode data, the WUS 205 may indicate to harvest energy during a first portion of the on duration 225 and to decode data during a second portion of the on duration 225 (e.g., where the first portion may follow the second portion or the second portion may follow the first portion). In some such examples, the WUS 205 may include a parameter $\alpha$ to indicate a length of the first portion for harvesting energy, a length of the second portion for decoding data, or both. In some examples, harvesting energy in the first portion and decoding data in the second portion before or after the first portion may be associated with a time-switching architecture as described herein, for instance, with reference to FIG. 3A.

In other examples in which a WUS 205 indicates to harvest energy and decode data, the WUS 205 may indicate to harvest energy or decode data during one portion of the on duration 225 (e.g., not both) and to harvest energy and decode data during another portion of the on duration 225 (e.g., concurrently for at least part of the other portion). In some such examples, the WUS 205 may indicate a first parameter $\rho$ to indicate a length of the first portion, the second portion, or both and may indicate a second parameter $\alpha$ to denote a fraction of energy that UE 115-a is to harvest or that UE 115-a is to use for decoding in the second portion. In some examples, using the first portion to harvest energy or decode data and the second portion to harvest energy and decode data may be associated with a separate-panel architecture as described herein, for instance, with reference to FIG. 3C. Additional details may be described herein, for instance, with reference to FIG. 4C.

In some examples, UE 115-a may fail to decode a WUS 205. In some such examples, UE 115-a may use a configuration from wireless device 202-a to either wake up (e.g., become active) or sleep (e.g., remain inactive) during an on duration. If waking up, wireless device 202-a, may determine that the corresponding on duration 225 is for decoding data, harvesting energy, or both. In some examples, the operation may be configurable. For instance, whether UE 115-a is to decode data, harvest energy, or both may be configured at UE 115-a by wireless device 202-a or another device. Additionally, or alternatively, UE 115-a may be configured by a random-decision indication that uses a set of parameters associated with a set of respective probabilities. For instance, a first parameter $p_1$ may indicate a probability that UE 115-a remains inactive, a second parameter $p_2$ may indicate a probability that UE 115-a decodes data and does not harvest energy, a third parameter $p_3$ indicates a probability that UE 115-a harvests energy and does not decode data, and $p_4$ indicates a probability that UE 115-a harvests energy and decodes data. In some examples, $p_4$ may be associated with a predefined $\rho$ and $\alpha$ (e.g., defined via previous configuration signaling). In some examples, each of $p_1$, $p_2$, $p_3$, and $p_4$ may be configured by wireless device 202-a. Additionally, or alternatively, UE 115-a may use a determinate probabilistic model to determine whether to decode data, harvest energy or both. For instance, UE 115-a may use a pseudo-random generator with seeds identified by UE 115-a and wireless device 202-a. Accordingly, both wireless device 202-a and UE 115-a may identify whether UE 115-a is to activate and whether UE 115-a is to decode data, harvest energy, or both.

In some examples, a WUS may be included in group-common downlink control information (DCI) (e.g., DCI format 2_6), or the group-common DCI may be the WUS. In such examples, a UE (e.g., configured with DRX mode operation) may be provided with additional information for detection of the group-common DCI in a PDCCH reception on a primary cell (PCell) or a secondary group primary cell (SPCell). For instance, a network entity may transmit the additional information to the UE. In some cases, the additional information may include a power saving radio network temporary identifier (PS-RNTI) for the group-common DCI. In some cases, the additional information may include a number of search space sets (e.g., configured by dci-Format2-6) for the UE to monitor PDCCH for detection of the group-common DCI on an active downlink BWP of the PCell or of the SPCell according to a common search space. In some cases, the additional information may include a payload size for the group-common DCI (e.g., configured by sizeDCI_2-6). In some cases, the additional information may include a location in the group-common DCI of a wake-up indication bit (e.g., configured by psPositionDCI-2-6). A zero value for the wake-up indication bit, when reported to higher layers, may indicate that the UE is not to start a DRX timer (e.g., drxonDurationTimer) for a next long DRX cycle, and a one value for the wake-up indication bit, when reported to higher layers, may indicate that the UE is to start the DRX timer for a next long DRX cycle.

In accordance with the techniques described herein, a group-common DCI may be configured with one or more first additional fields to configure the UE 115-a to wake-up during an on duration, one or more second additional fields to configure the UE 115-a to either decode data, harvest energy, or decode data and harvest energy during an on duration, or both. The one or more first additional fields may be used to configure active operation, and the one or more second additional fields may be used to configure energy harvesting operation. Active operation may refer to either switching to an active state or remaining in an inactive state in an on duration, and energy harvesting operation may refer to decoding data, harvesting energy, or decoding data and harvesting energy in an on duration. The group-common DCI may be for a group of UEs, and the additional fields in the group-common DCI may be for one or the group of UEs. In some cases, the UE 115-a may be directed or configured to read some fields in the group-common DCI (e.g., including a one-bit field for active operation or energy harvesting operation), and the UE 115-a may be directed or configured to read other configurations dedicated to the UE 115-a (e.g., related to energy harvesting). In such cases, the UE 115-a may use the fields in the group-common DCI and the other configurations to determine an energy harvesting operation to perform during an on duration (e.g., decode data, harvest energy, or both).

In some aspects, the DCI serving as a WUS for configuring energy harvesting operation may be based on a PDCCH (e.g., a polar-based coded signal), may be based on a sequence-based signal, or may exploit a DRX WUS design (e.g., exploit CDRX PDCCH in a current design). For a design of a UE group-common indication of energy harvesting operation in a PDCCH, a WUS PDCCH (e.g., DCI format 2_6) received outside a DRX active time may be a baseline design.

In some aspects, the baseline design may be modified to design a DCI for configuring energy harvesting operation, and a first DCI for simply configuring active operation may be different from a second DCI for configuring energy harvesting operation. In such aspects, an additional bit field may be added to the baseline design (e.g., a group-common DCI, which may be flexible with available bits for configuring energy harvesting operation) such that a network entity may indicate energy harvesting activity to the UE 115-a. The first DCI configuring active operation may be differentiated from the second DCI configuring energy harvesting operation using an RNTI or a CORESET. For instance, a network entity may transmit the first DCI to the UE 115-a with a first RNTI or in a first CORESET, and the network entity may transmit the second DCI to the UE 115-a with a second RNTI or in a second CORESET (e.g., where the contents and meanings of fields in the first DCI and the second DCI are different).

In other aspects, the baseline design may be modified to design a DCI for configuring energy harvesting operation and configuring active operation. That is, additional fields may be included in the DCI for configuring energy harvesting operation (e.g., since the DCI may be flexible, may have a variable size, and a network may define additional parameters or fields for configuring energy harvesting operation). In some examples, configurations for energy harvesting may be included in the DCI. In other examples, configurations for energy harvesting may be configured by RRC (e.g., and not contained in the DCI due to a limited DCI size shared by a group of UEs), and the UE 115-a may use a configuration configured by RRC for determining an energy harvesting operation. If a threshold number of configurations for energy harvesting operation are configured by RRC, the DCI may include one or more bits to indicate which configuration the UE 115-a may use for energy harvesting operation.

In some examples, configurations for energy harvesting (e.g., of an energy harvesting task) may be done using RRC or a MAC-CE, and DCI may activate a configuration. For instance, the DCI may active a configuration among many configurations indicated using RRC or the MAC-CE or activate the configuration indicated using RRC or the MAC-CE (e.g., if the RRC or the MAC-CE indicates a single configuration). That is, multiple configurations may be signaled via RRC, one or more configurations may be downselected using MAC-CE, and a single configuration may be indicated in DCI (e.g., WUS DCI). If a single configuration is signaled via RRC, or the MAC-CE downselects the configurations to a single configuration, the UE 115-a may adopt, implement, or use the configuration for energy harvesting operation once DCI (e.g., a WUS) is received. The configuration for energy harvesting may indicate whether the UE 115-a is to decode data, perform energy harvesting, or both during an on duration, and the configuration for energy harvesting may indicate a technique for performing the energy harvesting or decoding the data (e.g., as described in additional detail with reference to FIGs. 3A-3C and FIGs. 4A-4C).

The configurations for energy harvesting may include one or more configuration parameters indicating frequency ranges for performing energy harvesting such that the UE 115-a may adjust an energy harvesting circuit configuration (e.g., RF adjustment, etc.). The configurations for energy harvesting may also include one or more power splitting factors for the UE 115-a to use when the UE 115-a is configured to perform power-splitting energy harvesting (e.g., as described herein, for instance, with reference to FIG. 3B). The configurations for energy harvesting may also include one or more configuration parameters for time for energy harvesting and time for decoding data when the UE 115-a is configured to perform time-splitting energy harvesting (e.g., as described herein, for instance, with reference to FIG. 3A). The configurations for energy harvesting may include one or more configuration parameters for time for energy harvesting and time for decoding data when the UE 115-a is configured to decode data and perform energy harvesting using a separated architecture (e.g., as described herein, for instance, with reference to FIG. 3C). The configurations for energy harvesting may include one or more configuration parameters for analog or digital beamformers (e.g., filters or an indication of a beam) for the UE 115-a to use to perform energy harvesting. The configurations for energy harvesting may include a configuration of an energy harvesting signal, including an initial configuration of waveforms, sequences, or demodulation reference signal (DMRS) configurations.

In some aspects, the UE 115-a may support a first DCI for configuring active operation and a second DCI for configuring energy harvesting operation. That is, the UE 115-a may expect to receive either the first DCI or the second DCI prior to an on duration. The UE 115-a may receive RRC signaling indicating configurations for energy harvesting, and the UE 115-a may receive a MAC-CE downselecting the configurations for energy harvesting. That is, the MAC-CE may indicate a subset of configurations available to the UE 115-a from the configurations indicated in the RRC signaling.

If the UE 115-a receives the first DCI (e.g., DCI format 2_6 without changes), then the UE 115-a may determine a configuration for energy harvesting using one of one or more techniques supported by the UE 115-a. In some cases, the UE 115-a may receive RRC signaling or a MAC-CE indicating the technique for the UE 115-a to use to determine the configuration for energy harvesting, or the UE 115-a may otherwise identify the technique to use to determine the configuration for energy harvesting.

In an example of a technique for determining the configuration for energy harvesting, the UE 115-a may avoid performing energy harvesting (e.g., expect that there is no energy harvesting), and the UE 115-a may decode data during an on duration (e.g., expect data within the on duration for an entirety of the on duration). In another example of a technique for determining the configuration for energy harvesting, the UE 115-a may use a default energy harvesting configuration. In this example, a network entity or a transmitting device (e.g., the wireless device 202-a) may define a default energy harvesting configuration. The default energy harvesting configuration may be the same as or different from a configuration for energy harvesting used when the UE 115-a fails to decode a DCI (e.g., the WUS 205). In yet another example of a technique for determining the configuration for energy harvesting, the UE 115-a may use the configuration for energy harvesting indicated by a MAC-CE or via RRC (e.g., when the MAC-CE or RRC indicates a single configuration). That is, the one energy harvesting configuration after downselection by MAC-CE (e.g., assuming the MAC-CE downselected to a single configuration) may be assumed by the UE 115-a.

If the UE 115-a receives the second DCI (e.g., modified DCI format 2_6, where a field is defined or at least one bit is added for configuring energy harvesting), then the UE 115-a may determine a configuration for energy harvesting using one of one or more techniques supported by the UE 115-a. In some cases, the UE 115-a may receive RRC signaling or a MAC-CE indicating the technique for the UE 115-a to use to determine the configuration for energy harvesting, or the UE 115-a may otherwise identify the technique to use to determine the configuration for energy harvesting. For instance, switching between techniques for determining the configuration for energy harvesting may be either configured by RRC or a MAC-CE, or the second DCI may include a field that indicates the use of an index to select a configuration among configurations or to provide a new configuration (e.g., different from the configurations signaled via RRC or a MAC-CE).

In one example of a technique for determining the configuration for energy harvesting, a network entity may indicate, and the UE 115-a may receive, an index of a configuration for the UE 115-a to use for energy harvesting (e.g., one of the configurations downselected by the MAC-CE, or the configurations indicated in RRC if there is no downselection by a MAC-CE). In another example of a technique for determining the configuration for energy harvesting, the second DCI may indicate a new configuration different from the configurations indicated in RRC or a MAC-CE. In yet another example of a technique for determining the configuration for energy harvesting, the second DCI (e.g., new WUS reception) may indicate that a network entity is reconfiguring the UE 115-a (e.g., changing a configuration at the UE 115-a) for energy harvesting. For instance, the second DCI may indicate that the UE 115-a is to use the configuration for energy harvesting indicated by a MAC-CE or via RRC (e.g., when the MAC-CE or RRC indicates a single configuration). The UE 115-a may then use the configuration for energy harvesting indicated by the MAC-CE or via RRC until the UE 115-a receives another second DCI changing a configuration for energy harvesting at the UE 115-a.

The methods of the present disclosure may be associated with one or more advantages. For instance, using a WUS 205 to indicate whether UE 115-a is to harvest energy, decode data, or both may enable UE 115-a to make the determination to harvest energy or decode data dynamically. Additionally, using the WUS 205 to perform the indication may enable UE 115-a to make the determination prior to a corresponding on duration 225 (e.g., UE 115-a may not use any time during the on duration to make the determination). Additionally, or alternatively, in examples in which UE 115-a fails to receive the WUS 205, the methods described herein may enable UE 115-a to still make a decision as to whether to harvest energy, decode data, or both.

**FIGs. 3A, 3B, and 3C** illustrate examples of architectures 300-a, 300-b, and 300-c that support waking-up a wirelessly-powered device in accordance with aspects of the present disclosure. In some examples, architectures 300-a, 300-b, and 300-c may be implemented by aspects of wireless communications system 100. For instance, architectures 300-a, 300-b, and 300-c may represent architectures at a UE 115 used to decode data and to harvest energy. Architectures 300-a, 300-b, and 300-c may represent three energy harvesting schemes. For instance, architecture 300-a may correspond to a time-switching architecture, architecture 300-b may correspond to a power-splitting architecture, and architecture 300-c may correspond to a separated receiver architecture.

In some examples, radio frequency (RF) energy harvesting may have one or more characteristics. For instance, RF sources may provide controllable or constant energy transfer over a distance for energy harvesters. Additionally, in a fixed RF energy harvesting network, the harvested energy may be predictable and relatively stable (e.g., within a threshold range) over time (e.g., due to a fixed distance between the source and the harvester). Using a random multipath fading channel model, for a single transmit antenna or port and a single receive antenna, the energy harvested at a node $j$ from a transmitting node $i$ may be given as $E_j = \eta P_i |g_{i\text{-}j}|^2 T$, where $P_i$ may be the transmit power by node $i$, $g_{i\text{-}j}$ may be a channel coefficient of a link between node $i$ and node $j$, $T$ is a time allocated for energy harvesting, and $\eta$ is an RF to direct current (RF-to-DC) conversion efficiency. In some examples, an energy harvesting node may include a microcontroller to process data; an RF transceiver for information transmission or reception; an energy harvester that includes an RF antenna, impedance matching circuits, a voltage converter, and a capacitor to collect energy from RF signals and store it as usable charge; a power management module which determines whether to store electricity obtained from the RF energy harvester or to use it for information transmission immediately; an energy storage or battery; or any combination thereof.

FIG. 3A may depict a time-switching architecture that enables a network node (e.g., a UE 115, a base station 105) to switch between receiving or decoding information and harvesting energy. Architecture 300-a may include a transceiver 305-a (e.g., or receiver), a distribution component 310-a, an energy harvester 315-a, and an information decoder 320-a. Transceiver 305-a may be configured to receive signals from a wireless device (e.g., another UE 115, another base station 105). Distribution component 310-a may be configured to selectively couple transceiver 305-a with energy harvester 315-a or information decoder 320-a. In some examples, distribution component 310-a may include one or more switches, diodes, transistors, or another switching component. Energy harvester 315-a may be configured to harvest energy of a signal received by transceiver 305-a when energy harvester 315-a is coupled with transceiver 305-a. Information decoder 320-a may be configured to decode data from a signal received by transceiver 305-a when information decoder 320-a is coupled with transceiver 305-a. In some examples, the energy harvested at receiver $j$ (e.g., transceiver 305-a) from source $i$ (e.g., a wireless device) may be determined as $E_j = n P_i |g_{i\text{-}j}|^2 \alpha T$, where $0 \leq \alpha \leq 1$ may be a fraction of time allocated for energy harvesting. In some examples, a data rate may be based on decoding and may be determined as $R_{i\text{-}j} = (1 -$

$$\alpha) log_2 \left(1 + \frac{|g_{i-j}|^2 P_i}{\kappa W}\right)$$

, where $\kappa$ corresponds to a noise spectral density, $W$ corresponds to a channel bandwidth, and $0 \leq 1 - \alpha \leq 1$ may be a fraction of time allocated for data reception and decoding. In some cases, this can be converted to a number of symbols or slots within a time duration or time period (e.g., 10 symbols of energy harvesting and 4 symbols of data transmission within a time period of 14 symbols (e.g., 1 slot).

FIG. 3B may depict a power-splitting architecture that enables a network node (e.g., a UE 115, a base station 105) to split a signal into two streams (e.g., one for information decoder 320-b and the other for energy harvester 315-b). Architecture 300-b may include a transceiver 305-b (e.g., or receiver), a distribution component 310-b, an energy harvester 315-b, and an information decoder 320-b. Transceiver 305-b may be configured to receive signals from a wireless device (e.g., another UE 115, another base station). Distribution component 310-b may be configured to couple transceiver 305-b with energy harvester 315-b and information decoder 320-b. In some examples, distribution component 310-b may include or be an example of a splitter or a divider (e.g., variable power divider). Energy harvester 315-b may be configured to harvest energy from a signal received by transceiver 305-b and information decoder 320-b may be configured to decode data from a signal received by transceiver 305-b. In some examples, the energy harvested at receiver $j$ (e.g., transceiver 305-b) from source $i$ (e.g., a wireless device) may be determined as $E_j = \eta \rho P_i |g_{i\text{-}j}|^2 T$, where $0 \leq \rho \leq 1$ may be a fraction of power allocated for energy harvesting. In some examples, a data rate may be based on decoding and may be deter-

$$\text{mined as } R_{i\text{-}j} = log_2 \left(1 + \frac{|g_{i-j}|^2 (1-\rho) P_i}{\kappa W}\right)$$

, where $\kappa$ corresponds to a noise spectral density, W corresponds to a channel bandwidth, and $0 \leq 1 - \rho \leq 1$ may be a fraction of power allocated for data reception and decoding.

FIG. 3C may depict a separated receiver architecture that enables a network node (a UE 115, a base station 105) to harvest energy using one receiver (e.g., transceiver 305-c) and to decode data using another receiver (e.g., transceiver 305-d). Architecture 300-c may include transceiver 305-c, transceiver 305-d, energy harvester 315-c, and information decoder 320-c. Transceiver 305-c may be configured to receive a first signal from a wireless device (e.g., another UE 115, another base station) and transceiver 305-d may be configured to receive a second signal from the wireless device. Energy harvester 315-c may be configured to harvest energy of the signal received by transceiver 305-c and information decoder 320-c may be configured to decode data from the second signal received by transceiver 305-d.

**FIGs. 4A, 4B, and 4C** illustrate examples of communication schemes 400-a, 400-b, and 400-c that support waking-up a wirelessly-powered device in accordance with aspects of the present disclosure. In some examples, communication schemes 400-a, 400-b, and 400-c may be implemented by aspects of wireless communications systems 100 or 200. For instance, WUS 405, data 410, and energy 415 may be transmitted by a wireless device 202-a as described with reference to FIG. 2, a UE 115 as described with reference to FIG. 1, or a base station 105 as described with reference to FIG. 1. Further, WUS 405, data 410, and energy 415 may be received by a UE 115 as described with reference to FIG. 1.

In FIG. 4A, a WUS 405 may indicate to either decode data 410 or to harvest energy 415. For instance, WUS 405-a may provide an indication 420-a to decode data 410-a during a first on duration of a DRX cycle 425-a. In some examples, decoding data 410-a may include UE 115-a monitoring a channel (e.g., a control channel) and decoding a transmission (e.g., a shared channel transmission) scheduled by the channel. In some examples, UE 115-a may transition to an inactive state before the on duration has fully elapsed or may remain in an active state after the on duration (e.g., if more data is scheduled to arrive after the on duration has fully elapsed). Additionally, WUS 405-b may provide an indication 420-b to harvest energy 415-a during a second on duration of the DRX cycle 425-a.

In FIG. 4B, a WUS 405 may indicate to decode data, harvest energy, or to decode data and harvest energy simultaneously during at least a portion of an on duration of a DRX cycle 425-b. For instance, WUS 405-c may provide an indication 420-c to decode data 410-b and harvest energy 415-b during a first on duration of a DRX cycle 425-b. WUS 405-d may provide an indication 420-d to harvest energy 415-c during a second on duration of the DRX cycle 425-b. In examples in which a UE 115 splits the power of a received signal into two streams (e.g., data 410-b, energy 415-b), WUS 405-c may have an initial value of power splitting that the UE 115 may use during one or more next transmissions (e.g., receptions at the UE 115) within an active cycle (e.g., until receiving a second indication from the wireless device or a base station 105). In some examples, the UE 115 may use a parameter $0 \leq \rho \leq 1$ to denote a fraction of energy to be harvested versus energy to be used for decoding For instance, the fraction of energy to be harvested may be determined as $\rho$ and the fraction of energy to be used for decoding may be determined as $1 - \rho$.

In FIG. 4C, a WUS 405 may indicate to decode data, harvest energy, or to decode data and harvest energy during a first portion 440 of an on duration of a DRX cycle 425-c and to harvest energy during a second portion 445 of the on duration. For instance, WUS 405-e may provide an indication 420-e to decode data 410-c during a first portion 440 of a first on duration of DRX cycle 425-c and to harvest energy 415-d during a second portion 445 of the first on duration. WUS 405-f may provide an indication 420-f to harvest energy 415-e during a second on duration of the DRX cycle 425-c. In examples in which the UE 115 performs time switching (e.g., as described herein, for instance, with reference to FIG. 3A), in which the UE 115 may split the time of an on duration into energy harvesting and data decoding, WUS 405-e may indicate an order to energy 415-d and data 410-c (e.g., may indicate which is in first portion 440 and which is in second portion 445) or may have a fraction or number of slots for each (e.g., until receiving a second indication from the wireless device or a base station 105).

In some examples, the UE 115 may use a parameter $\alpha$ to denote a fraction of a data duration over an entire time of an on duration $T$. For instance, in some examples, first portion 440 may be determined as $\alpha T$ and second portion 445 may be determined as $(1-\alpha)T$.

In some examples (e.g., examples in which the UE 115 uses separated-architecture as described herein, such as with reference to FIG. 3C), the UE 115 may have different panels for energy harvesting and data decoding and reception. In some such examples, WUS 405-e may not include energy harvesting information (e.g., may not indicate whether to harvest energy 415, decode data 410, or both). In other such examples, WUS 405-e may indicate that the UE 115 is to use a time-switching scheme such that the UE 115 is to decode data then harvest energy. In such examples, the UE 115 may harvest energy and decode data while the data is sent (e.g., in first portion 440), and may harvest energy while an energy signal is sent (e.g., in second portion 445).

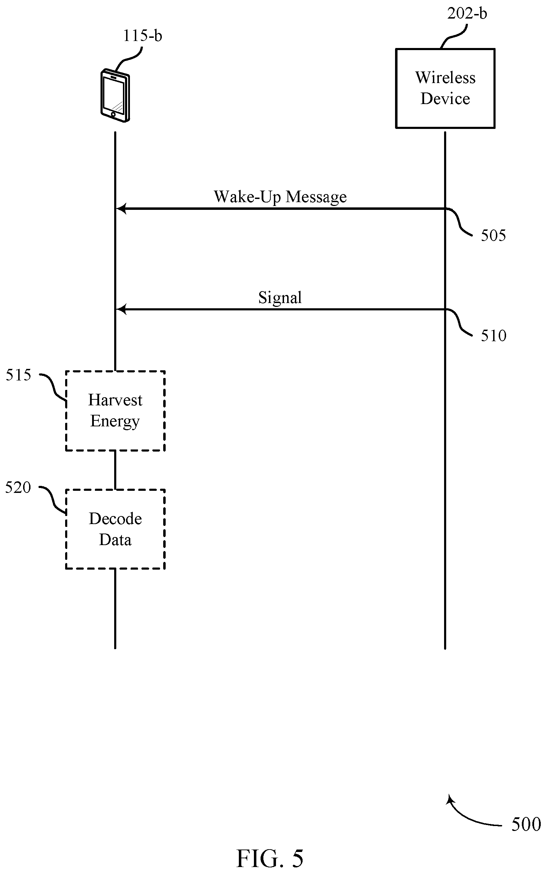

FIG. 5 illustrates an example of a process flow 500 that supports waking-up a wirelessly-powered device in accordance with aspects of the present disclosure. In some examples, process flow 500 may be implemented by one or more aspects of wireless communications systems 100 or 200. For instance, UE 115-b may be an example of a UE 115 as described with reference to FIG. 1 and wireless device 202-b may be an example of a wireless device 202-a as described with reference to FIG. 2, a base station 105 as described with reference to FIG. 1, or a UE 115 as described with reference to FIG. 1.

At 505, wireless device 202-b may transmit, to UE 115-b, a wake-up message (e.g., a WUS) comprising an indicator of whether an on duration of a DRX cycle is associated with harvesting energy from a signal transmitted during the on duration. The wake-up message may be transmitted in a particular slot or symbol relative to the on duration of the DRX cycle (e.g., a number of slots or symbols before the on duration). The wake-up message may be transmitted via a control channel, or via a dedicated physical channel.

At 510, wireless device 202-b may transmit, to UE 115-b, the signal during the on duration based on the wake-up message.

At 515, UE 115-b may harvest the energy from the signal. For instance, UE 115-b may harvest the energy from the signal based on the indicator of the wake-up message indicating that the on duration of the DRX cycle is associated with harvesting energy from the signal.

At 520, UE 115-b may decode data from the signal. For instance, UE 115-b may decode the data based on the indicator of the wake-up message indicating that the on duration of the DRX cycle is not associated with harvesting energy from the signal (e.g., in examples in which the wake-up message either indicates to harvest energy or decode data). Additionally, or alternatively, at 520, UE 115-b may refrain from decoding data from the signal based on the indicator of the wake-up message indicating that the on duration of the DRX cycle is associated with harvesting energy from the signal.

In some examples, the indicator of the wake-up message may indicate to decode data from the signal and to harvest energy from the signal during the on duration (e.g., may signal that UE 115-b is to perform 515 and 520). In some such examples, UE 115-b may harvest energy from the signal based on the indicator of the wake-up message indicating to harvest energy and may decode the data from the signal based on the indicator of the wake-up message indicating to decode the data from the signal. In some examples, harvesting the energy and decoding the data may occur concurrently during at least a portion of the on duration (e.g., as described with reference to FIG. 4B). In some such examples, UE 115-b may receive a parameter (e.g., $\rho$, $1 - \rho$) in the wake-up message or other signaling that indicates a fraction of power allocated for harvesting energy during the at least the portion. In some examples, harvesting the energy occurs during a first portion of the on duration and decoding the data occurs during a second portion of the on duration. In some such examples, the first portion and the second portion may be non-overlapping in time. Additionally, in some such examples, UE 115-b may receive a parameter (e.g., $\alpha$, $1 - \alpha$) in the wake-up message that indicates a first duration (e.g., a total length) of the first portion, a second duration (e.g., a total length) of the second portion, or both.

In some examples, UE 115-b may determine that UE 115-b has failed to receive or decode a second wake-up message for a second on duration of a second DRX cycle. In some such examples, UE 115-b may harvest energy from a second signal during the second on duration, decode data from the second signal from the second on duration, or both based on determining that UE 115-b has failed to receive or decode the second wake-up message. In some examples, UE 115-b may determine whether to harvest the energy from the second signal, decode data from the second signal, or both based on a first parameter associated with whether UE 115-b is to activate during the second on duration (e.g., $p_1$), a second parameter associated with whether to harvest energy (e.g., $p_3$), a third parameter associated with whether to decode data (e.g., $p_2$), a fourth parameter associated with whether to harvest the energy and to decode the data (e.g., $p_4$), or any combination thereof. In some examples, the first parameter corresponds to a first probability, the second parameter corresponds to a second probability, the third parameter corresponds to a third probability, and the fourth parameter corresponds to a fourth probability. Additionally, in some examples, UE 115-b may perform random selection according to a probability distribution to determine whether to remain deactivated during on duration, to harvest the energy during the on duration, to decode the data during the on duration, or to harvest the energy and to decode the data during the on duration. In some such examples, the probability distribution may include the first probability, the second probability, the third probability, and the fourth probability. In some examples, the probability distribution may be associated with a pseudo-random generator with seeds identified by wireless device 202-b and UE 115-b. Accordingly, both wireless device 202-b and UE 115-b may identify whether UE 115-b is to activate and whether UE 115-b is to decode data, harvest energy, or both.

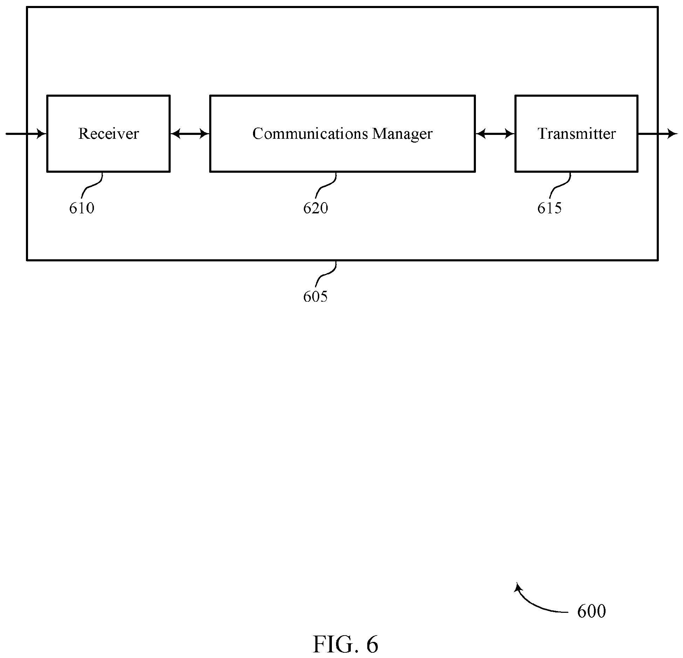

FIG. 6 shows a block diagram 600 of a device 605 that supports waking-up a wirelessly-powered device in accordance with aspects of the present disclosure. The device 605 may be an example of aspects of a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to waking-up a wirelessly-powered device). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to waking-up a wirelessly-powered device). In some examples, the transmitter 615 may be co-located with a receiver 610 in a transceiver module. The transmitter 615 may utilize a single antenna or a set of multiple antennas.

The communications manager 620, the receiver 610, the transmitter 615, or various combinations thereof or various components thereof may be examples of means for performing various aspects of waking-up a wirelessly-powered device as described herein. For example, the communications manager 620, the receiver 610, the transmitter 615, or various combinations or components thereof may support a method for performing one or more of the functions described herein.

In some examples, the communications manager 620, the receiver 610, the transmitter 615, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally, or alternatively, in some examples, the communications manager 620, the receiver 610, the transmitter 615, or various combinations or components thereof may be implemented in code (e.g., as communications management software or firmware) executed by a processor. If implemented in code executed by a processor, the functions of the communications manager 620, the receiver 610, the transmitter 615, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 620 may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

Additionally, or alternatively, the communications manager 620 may support wireless communication at a UE in accordance with examples as disclosed herein. For example, the communications manager 620 may be configured as or otherwise support a means for receiving a wake-up message including an indicator of whether an on duration of a discontinuous reception cycle is associated with harvesting energy from a signal transmitted during the on duration. The communications manager 620 may be configured as or otherwise support a means for receiving the signal during the on duration based on the wake-up message.

By including or configuring the communications manager 620 in accordance with examples as described herein, the device 605 (e.g., a processor controlling or otherwise coupled with the receiver 610, the transmitter 615, the communications manager 620, or a combination thereof) may support techniques for the device 605 to dynamically adjust whether the device 605 is harvesting energy, decoding data, or both. Additionally, the examples disclosed herein may support techniques for the device 605 to determine whether to harvest energy, decode data, or both even when the device 605 fails to receive and decode a wake-up message.

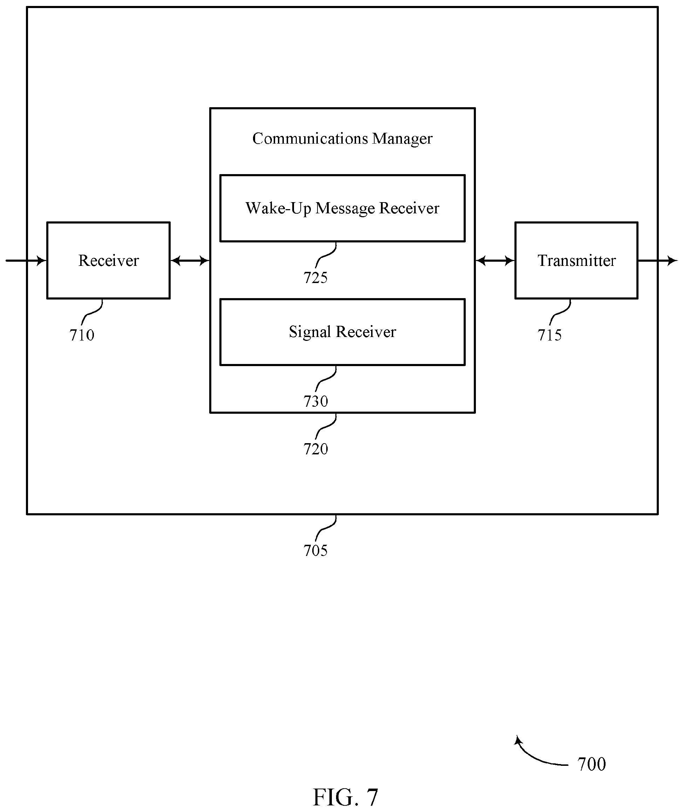

**FIG. 7** shows a block diagram 700 of a device 705 that supports waking-up a wirelessly-powered device in accordance with aspects of the present disclosure. The device 705 may be an example of aspects of a device 605 or a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to waking-up a wirelessly-powered device). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to waking-up a wirelessly-powered device). In some examples, the transmitter 715 may be co-located with a receiver 710 in a transceiver module. The transmitter 715 may utilize a single antenna or a set of multiple antennas.

The device 705, or various components thereof, may be an example of means for performing various aspects of waking-up a wirelessly-powered device as described herein. For example, the communications manager 720 may include a wake-up message receiver 725 a signal receiver 730, or any combination thereof. The communications manager 720 may be an example of aspects of a communications manager 620 as described herein. In some examples, the communications manager 720, or various components thereof, may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communication at a UE in accordance with examples as disclosed herein. The wake-up message receiver 725 may be configured as or otherwise support a means for receiving a wake-up message including an indicator of whether an on duration of a discontinuous reception cycle is associated with harvesting energy from a signal transmitted during the on duration. The signal receiver 730 may be configured as or otherwise support a means for receiving the signal during the on duration based on the wake-up message.

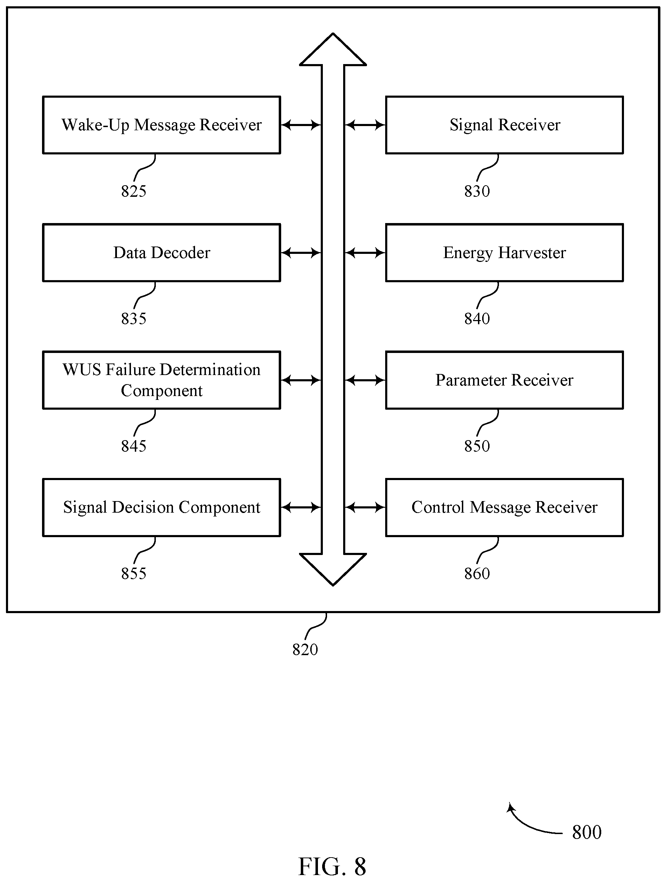

**FIG. 8** shows a block diagram 800 of a communications manager 820 that supports waking-up a wirelessly-powered device in accordance with aspects of the present disclosure. The communications manager 820 may be an example of aspects of a communications manager 620, a communications manager 720, or both, as described herein. The communications manager 820, or various components thereof, may be an example of means for performing various aspects of waking-up a wirelessly-powered device as described herein. For example, the communications manager 820 may include a wake-up message receiver 825, a signal receiver 830, a data decoder 835, an energy harvester 840, a WUS failure determination component 845, a parameter receiver 850, a signal decision component 855, a control message receiver 860, or any combination thereof. Each of these components may communicate, directly or indirectly, with one another (e.g., via one or more buses).

Additionally, or alternatively, the communications manager 820 may support wireless communication at a UE in accordance with examples as disclosed herein. The wake-up message receiver 825 may be configured as or otherwise support a means for receiving a wake-up message including an indicator of whether an on duration of a discontinuous reception cycle is associated with harvesting energy from a signal transmitted during the on duration. The signal receiver 830 may be configured as or otherwise support a means for receiving the signal during the on duration based on the wake-up message.

In some examples, the data decoder 835 may be configured as or otherwise support a means for decoding data from the signal based on the indicator of the wake-up message indicating that the on duration of the discontinuous reception cycle is not associated with harvesting energy from the signal.

In some examples, the energy harvester 840 may be configured as or otherwise support a means for harvesting the energy from the signal based on the indicator of the wake-up message indicating that at least a portion of the discontinuous reception cycle is associated with harvesting energy from the signal. In some examples, the data decoder 835 may be configured as or otherwise support a means for refraining from decoding data from the signal based on the indicator of the wake-up message indicating that the on duration of the discontinuous reception cycle is associated with harvesting energy from the signal.

In some examples, the indicator of the wake-up message indicates to decode data from the signal and to harvest energy from the signal during the on duration, and the energy harvester 840 may be configured as or otherwise support a means for harvesting energy from the signal based on the indicator of the wake-up message indicating to harvest energy from the signal. In some examples, the indicator of the wake-up message indicates to decode data from the signal and to harvest energy from the signal during the on duration, and the data decoder 835 may be configured as or otherwise support a means for decoding the data from the signal based on the indicator of the wake-up message indicating to decode the data from the signal.

In some examples, harvesting the energy and decoding the data occur concurrently during at least a portion of the on duration. In some examples, to support receiving the wake-up message, the parameter receiver 850 may be configured as or otherwise support a means for receiving a parameter in the wake-up message that indicates a fraction of power allocated for harvesting energy during the at least the portion.

In some examples, harvesting the energy occurs during a first portion of the on duration and decoding the data occurs during a second portion of the on duration, the first portion and the second portion being non-overlapping in time. In some examples, to support receiving the wake-up message, the parameter receiver 850 may be configured as or otherwise support a means for receiving a parameter in the wake-up message that indicates a first duration of the first portion, a second duration of the second portion, an order of the first portion and the second portion, a gap between the first duration and the second duration, or a combination thereof.

In some examples, the energy harvester 840 may be configured as or otherwise support a means for harvesting energy from a second signal during a second on duration, decoding data from the second signal during the second on duration, or both, independent of obtaining or decoding a second wake-up message associated with the second on duration of a second discontinuous reception cycle.

In some examples, the data decoder 835, the energy harvester 840, or both may harvest energy from the second signal during the second on duration, decode data from the second signal during the second on duration, switch to an active state during the second on duration, or perform some combination thereof based at least in part on a first parameter associated with whether the apparatus is to switch to the active state during the second on duration, a second parameter associated with whether to harvest the energy, a third parameter associated with whether to decode the data, a fourth parameter associated with whether to harvest the energy and to decode the data, or any combination thereof.

In some examples, the first parameter corresponds to a first probability, the second parameter corresponds to a second probability, the third parameter corresponds to a third probability, and the fourth parameter corresponds to a fourth probability. In some examples, to support determining whether to harvest the energy, decode the data, or both, the signal decision component 855 may be configured as or otherwise support a means for performing random selection according to a probability distribution to determine whether to remain deactivated during the on duration, to harvest the energy during the on duration, to decode the data during the on duration, or to harvest the energy and to decode the data during the on duration, where the probability distribution includes the first probability, the second probability, the third probability, and the fourth probability.

The wake-up message receiver 825 may be configured as or otherwise support a means for receiving first downlink control information comprising the indicator of whether the on duration of the discontinuous reception cycle is associated with harvesting energy from the signal transmitted during the on duration. The control message receiver 860 may be configured as or otherwise support a means for receiving one or more control messages indicating one or more configurations associated with harvesting energy from the signal transmitted during the on duration, wherein the indicator in the first downlink control information of whether the on duration of the discontinuous reception cycle is associated with harvesting energy from the signal transmitted during the on duration is based at least in part on the one or more configurations indicated in the one or more control messages.

In some examples, the one or more control messages indicating the one or more configurations comprise at least one of a radio resource control message indicating a set of configurations associated with harvesting energy from the signal transmitted during the on duration or a medium access control control element indicating a subset of configurations from the set of configurations associated with harvesting energy from the signal transmitted during the on duration.

In some examples, the indicator in the first downlink control information indicates a single configuration from the subset of configurations associated with harvesting energy from the signal transmitted during the on duration. In some examples, the subset of configurations indicated in the medium access control control element comprises the single configuration, and the indicator in the first downlink control information indicates, by default, the single configuration associated with harvesting energy from the signal transmitted during the on duration. In some examples, he wake-up message receiver 825 may be configured as or otherwise support a means for receiving second downlink control information indicating a different configuration from the configurations in the subset of configurations associated with harvesting energy from a signal transmitted during a second on duration of a second discontinuous reception cycle.

In some examples, the one or more configurations comprise a configuration to harvest energy within one or more frequency ranges in the on duration, a configuration of a fraction of power allocated for harvesting energy in the on duration, a configuration of a first portion of the on duration in which to harvest energy and a second portion of the on duration in which to decode data, a configuration of filters or beams to use for harvesting energy in the on duration, a configuration of the signal from which to harvest energy, or a combination thereof.

The wake-up message receiver 825 may be configured as or otherwise support a means for receiving the second downlink control information indicating whether to switch to an active state or remain in an inactive state during a second on duration of a second discontinuous reception cycle. The data decoder 835 may be configured as or otherwise support a means for decoding data from a second signal during the second on duration based on obtaining the second downlink control information. The energy harvester 840 may be configured as or otherwise support a means for harvesting energy from a second signal during the second on duration, decode data from the second signal during the second on duration, or both in accordance with a default configuration based at least in part on obtaining the second downlink control information.

The control message receiver 860 may be configured as or otherwise support a means for receiving a control message indicating a single configuration associated with harvesting energy from a second signal transmitted during the second on duration, wherein the second downlink control information indicates, by default, the single configuration associated with harvesting energy from a second signal during the second on duration. In some examples, the data decoder 835, the energy harvester 840, or both may harvest energy from the second signal during the second on duration, decode data from the second signal during the second on duration, or both based on the single configuration.

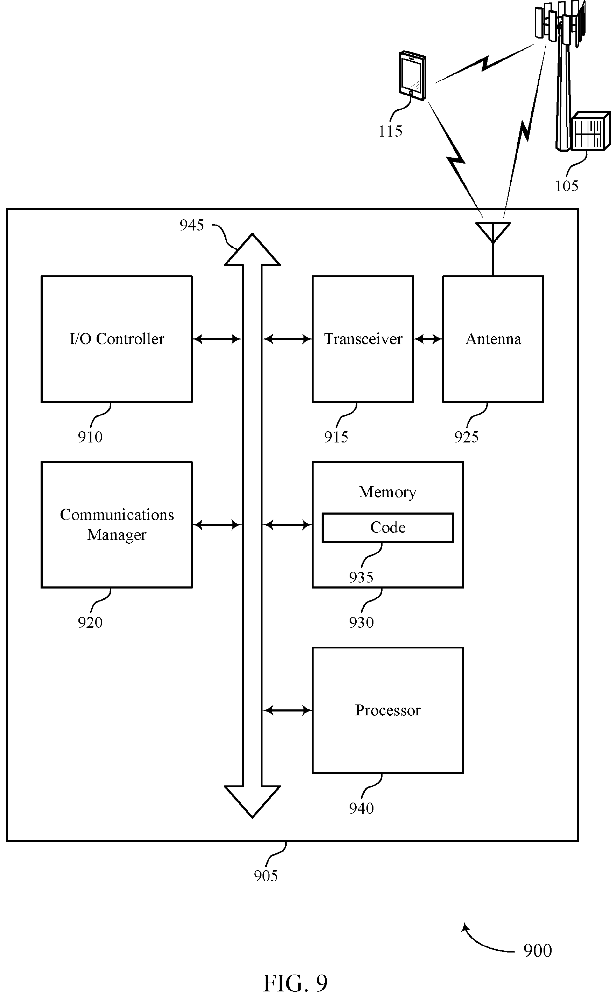

**FIG. 9** shows a diagram of a system 900 including a device 905 that supports waking-up a wirelessly-powered device in accordance with aspects of the present disclosure. The device 905 may be an example of or include the components of a device 605, a device 705, or a UE 115 as described herein. The device 905 may communicate wirelessly with one or more base stations 105, UEs 115, or any combination thereof. The device 905 may include components for bi-directional voice and data communications including components for transmitting and receiving communications, such as a communications manager 920, an input/output (I/O) controller 910, a transceiver 915, an antenna 925, a memory 930, code 935, and a processor 940. These components may be in electronic communication or otherwise coupled (e.g., operatively, communicatively, functionally, electronically, electrically) via one or more buses (e.g., a bus 945).

The I/O controller 910 may manage input and output signals for the device 905. The I/O controller 910 may also manage peripherals not integrated into the device 905. In some cases, the I/O controller 910 may represent a physical connection or port to an external peripheral. In some cases, the I/O controller 910 may utilize an operating system such as iOS®, ANDROID®, MS-DOS®, MS-WINDOWS®, OS/2®, UNIX®, LINUX®, or another known operating system. Additionally, or alternatively, the I/O controller 910 may represent or interact with a modem, a keyboard, a mouse, a touchscreen, or a similar device. In some cases, the I/O controller 910 may be implemented as part of a processor, such as the processor 940. In some cases, a user may interact with the device 905 via the I/O controller 910 or via hardware components controlled by the I/O controller 910.

In some cases, the device 905 may include a single antenna 925. However, in some other cases, the device 905 may have more than one antenna 925, which may be capable of concurrently transmitting or receiving multiple wireless transmissions. The transceiver 915 may communicate bi-directionally, via the one or more antennas 925, wired, or wireless links as described herein. For example, the transceiver 915 may represent a wireless transceiver and may communicate bi-directionally with another wireless transceiver. The transceiver 915 may also include a modem to modulate the packets, to provide the modulated packets to one or more antennas 925 for transmission, and to demodulate packets received from the one or more antennas 925. The transceiver 915, or the transceiver 915 and one or more antennas 925, may be an example of a transmitter 615, a transmitter 715, a receiver 610, a receiver 710, or any combination thereof or component thereof, as described herein.

The memory 930 may include random access memory (RAM) and read-only memory (ROM). The memory 930 may store computer-readable, computer-executable code 935 including instructions that, when executed by the processor 940, cause the device 905 to perform various functions described herein. The code 935 may be stored in a non-transitory computer-readable medium such as system memory or another type of memory. In some cases, the code 935 may not be directly executable by the processor 940 but may cause a computer (e.g., when compiled and executed) to perform functions described herein. In some cases, the memory 930 may contain, among other things, a basic I/O system (BIOS) which may control basic hardware or software operation such as the interaction with peripheral components or devices.

The processor 940 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In some other cases, a memory controller may be integrated into the processor 940. The processor 940 may be configured to execute computer-readable instructions stored in a memory (e.g., the memory 930) to cause the device 905 to perform various functions (e.g., functions or tasks supporting waking-up a wirelessly-powered device). For example, the device 905 or a component of the device 905 may include a processor 940 and memory 930 coupled with the processor 940, the processor 940 and memory 930 configured to perform various functions described herein.

Additionally, or alternatively, the communications manager 920 may support wireless communication at a UE in accordance with examples as disclosed herein. For example, the communications manager 920 may be configured as or otherwise support a means for receiving a wake-up message including an indicator of whether an on duration of a discontinuous reception cycle is associated with harvesting energy from a signal transmitted during the on duration. The communications manager 920 may be configured as or otherwise support a means for receiving the signal during the on duration based on the wake-up message.

By including or configuring the communications manager 920 in accordance with examples as described herein, the device 905 may support techniques for the device 905 to dynamically adjust whether the device 605 is harvesting energy, decoding data, or both. Additionally, the examples disclosed herein may support techniques for the device 905 to determine whether to harvest energy, decode data, or both even when the device 905 fails to receive and decode a wake-up message.

In some examples, the communications manager 920 may be configured to perform various operations (e.g., receiving, monitoring, transmitting) using or otherwise in cooperation with the transceiver 915, the one or more antennas 925, or any combination thereof. Although the communications manager 920 is illustrated as a separate component, in some examples, one or more functions described with reference to the communications manager 920 may be supported by or performed by the processor 940, the memory 930, the code 935, or any combination thereof. For example, the code 935 may include instructions executable by the processor 940 to cause the device 905 to perform various aspects of waking-up a wirelessly-powered device as described herein, or the processor 940 and the memory 930 may be otherwise configured to perform or support such operations.

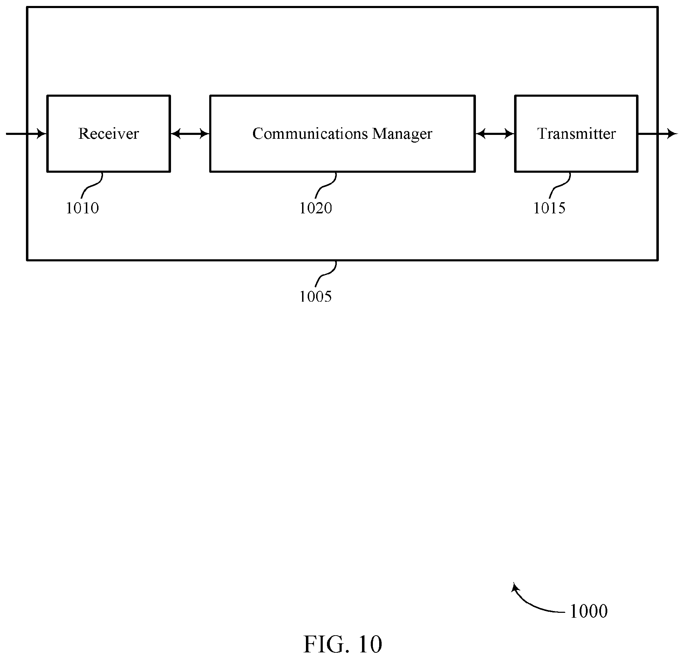

FIG. 10 shows a block diagram 1000 of a device 1005 that supports waking-up a wirelessly-powered device in accordance with aspects of the present disclosure. The device 1005 may be an example of aspects of a base station 105, a UE 115, or both as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to waking-up a wirelessly-powered device). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to waking-up a wirelessly-powered device). In some examples, the transmitter 1015 may be co-located with a receiver 1010 in a transceiver module. The transmitter 1015 may utilize a single antenna or a set of multiple antennas.

The communications manager 1020, the receiver 1010, the transmitter 1015, or various combinations thereof or various components thereof may be examples of means for performing various aspects of waking-up a wirelessly-powered device as described herein. For example, the communications manager 1020, the receiver 1010, the transmitter 1015, or various combinations or components thereof may support a method for performing one or more of the functions described herein.

In some examples, the communications manager 1020, the receiver 1010, the transmitter 1015, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally, or alternatively, in some examples, the communications manager 1020, the receiver 1010, the transmitter 1015, or various combinations or components thereof may be implemented in code (e.g., as communications management software or firmware) executed by a processor. If implemented in code executed by a processor, the functions of the communications manager 1020, the receiver 1010, the transmitter 1015, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 1020 may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

Additionally, or alternatively, the communications manager 1020 may support wireless communication at a wireless device in accordance with examples as disclosed herein. For example, the communications manager 1020 may be configured as or otherwise support a means for transmitting, to a UE, a wake-up message including an indicator of whether an on duration of a discontinuous reception cycle is associated with harvesting energy from a signal transmitted in the on duration. The communications manager 1020 may be configured as or otherwise support a means for transmitting the signal during the on duration based on the wake-up message.

By including or configuring the communications manager 1020 in accordance with examples as described herein, the device 1005 (e.g., a processor controlling or otherwise coupled with the receiver 1010, the transmitter 1015, the communications manager 1020, or a combination thereof) may support techniques for the device 1005 to dynamically adjust whether a UE is harvesting energy, decoding data, or both.

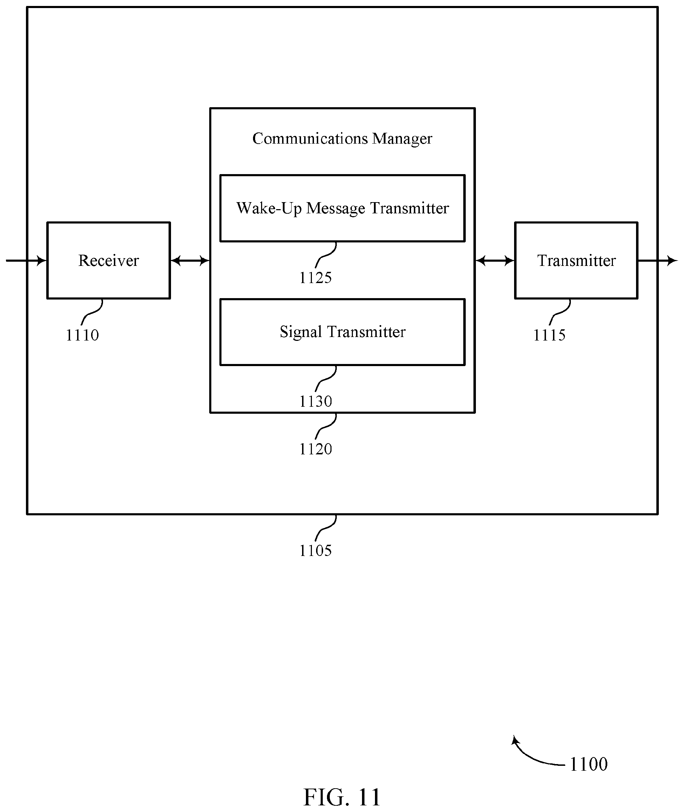

FIG. 11 shows a block diagram 1100 of a device 1105 that supports waking-up a wirelessly-powered device in accordance with aspects of the present disclosure. The device 1105 may be an example of aspects of a device 1005, a base station 105, or a UE 115 as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for receiving information such as packets, user data, control information, or any combination thereof associated with various information channels (e.g., control channels, data channels, information channels related to waking-up a wirelessly-powered device). Information may be passed on to other components of the device 1105. The receiver 1110 may utilize a single antenna or a set of multiple antennas.

The transmitter 1115 may provide a means for transmitting signals generated by other components of the device 1105. For example, the transmitter 1115 may transmit information such as packets, user data, control information, or any combination thereof associated with various information channels (e.g., control channels, data channels, information channels related to waking-up a wirelessly-powered device). In some examples, the transmitter 1115 may be co-located with a receiver 1110 in a transceiver module. The transmitter 1115 may utilize a single antenna or a set of multiple antennas.

The device 1105, or various components thereof, may be an example of means for performing various aspects of waking-up a wirelessly-powered device as described herein. For example, the communications manager 1120 may include a wake-up message transmitter 1125 a signal transmitter 1130, or any combination thereof. The communications manager 1120 may be an example of aspects of a communications manager 1020 as described herein. In some examples, the communications manager 1120, or various components thereof, may be configured to perform various operations (e.g., receiving, monitoring, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to receive information, transmit information, or perform various other operations as described herein.

The communications manager 1120 may support wireless communication at a wireless device in accordance with examples as disclosed herein. The wake-up message transmitter 1125 may be configured as or otherwise support a means for transmitting, to a UE, a wake-up message including an indicator of whether an on duration of a discontinuous reception cycle is associated with harvesting energy from a signal transmitted in the on duration. The signal transmitter 1130 may be configured as or otherwise support a means for transmitting the signal during the on duration based on the wake-up message.

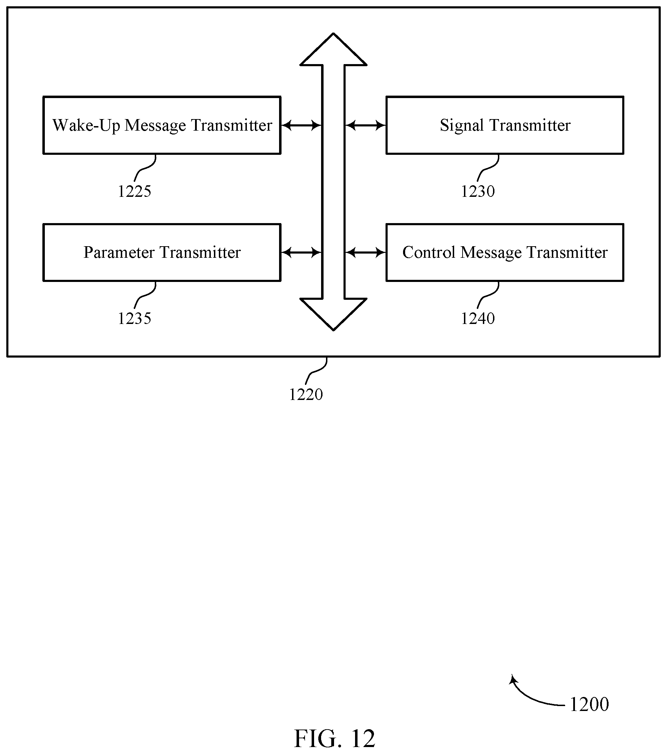

**FIG. 12** shows a block diagram 1200 of a communications manager 1220 that supports waking-up a wirelessly-powered device in accordance with aspects of the present disclosure. The communications manager 1220 may be an example of aspects of a communications manager 1020, a communications manager 1120, or both, as described herein. The communications manager 1220, or various components thereof, may be an example of means for performing various aspects of waking-up a wirelessly-powered device as described herein. For example, the communications manager 1220 may include a wake-up message transmitter 1225, a signal transmitter 1230, a parameter transmitter 1235, a control message transmitter 1240, or any combination thereof. Each of these components may communicate, directly or indirectly, with one another (e.g., via one or more buses).

Additionally, or alternatively, the communications manager 1220 may support wireless communication at a wireless device in accordance with examples as disclosed herein. The wake-up message transmitter 1225 may be configured as or otherwise support a means for transmitting, to a UE, a wake-up message including an indicator of whether an on duration of a discontinuous reception cycle is associated with harvesting energy from a signal transmitted in the on duration. The signal transmitter 1230 may be configured as or otherwise support a means for transmitting the signal during the on duration based on the wake-up message.

In some examples, the wake-up message indicates to decode data from the signal based on indicating that the on duration is not associated with harvesting energy from the signal.

In some examples, the wake-up message indicates to decode data from the signal and to harvest energy from the signal during the on duration.

In some examples, the wake-up message indicates to harvest the energy and decode the data concurrently during at least a portion of the on duration, where transmitting the wake-up message, the parameter transmitter 1235 may be configured as or otherwise support a means for transmitting a parameter that indicates a fraction of power allocated for harvesting energy during the portion.

In some examples, the wake-up message indicates to harvest the energy during a first portion of the on duration and to decode the data during a second portion of the on duration, the first portion and the second portion being non-overlapping in time. In some examples, to support transmitting the wake-up message, the parameter transmitter 1235 may be configured as or otherwise support a means for transmitting a parameter that indicates a first duration of the first portion, a second duration of the second portion, or both.

In some examples, the wireless device includes a second UE.

In some examples, the wireless device includes a base station.

The wake-up message transmitter 1225 may be configured as or otherwise support a means for transmitting first downlink control information comprising the indicator of whether the on duration of the discontinuous reception cycle is associated with harvesting energy from the signal transmitted during the on duration.

The control message transmitter 1240 may be configured as or otherwise support a means for transmitting one or more control messages indicating one or more configurations associated with harvesting energy from the signal transmitted during the on duration, wherein the indicator in the first downlink control information of whether the on duration of the discontinuous reception cycle is associated with harvesting energy from the signal transmitted during the on duration is based at least in part on the one or more configurations indicated in the one or more control messages.

In some examples, the one or more control messages indicating the one or more configurations comprise at least one of a radio resource control message indicating a set of configurations associated with harvesting energy from the signal transmitted during the on duration or a medium access control control element indicating a subset of configurations from the set of configurations associated with harvesting energy from the signal transmitted during the on duration.

In some examples, the indicator in the first downlink control information indicates a single configuration from the subset of configurations associated with harvesting energy from the signal transmitted during the on duration. In some examples, the subset of configurations indicated in the medium access control control element comprises the single configuration, and the indicator in the first downlink control information indicates, by default, the single configuration associated with harvesting energy from the signal transmitted during the on duration. In some examples, the wake-up message transmitter 1225 may be configured as or otherwise support a means for transmitting second downlink control information indicating a different configuration from the configurations in the subset of configurations associated with harvesting energy from a signal transmitted during a second on duration of a second discontinuous reception cycle.

In some examples, the one or more configurations comprise a configuration to harvest energy within one or more frequency ranges in the on duration, a configuration of a fraction of power allocated for harvesting energy in the on duration, a configuration of a first portion of the on duration in which to harvest energy and a second portion of the on duration in which to decode data, a configuration of filters or beams to use for harvesting energy in the on duration, a configuration of the signal from which to harvest energy, or a combination thereof.

The wake-up message transmitter 1225 may be configured as or otherwise support a means for transmitting the second downlink control information indicating whether to switch to an active state or remain in an inactive state during a second on duration of a second discontinuous reception cycle. The control message transmitter 1240 may be configured as or otherwise support a means for transmitting a control message indicating a single configuration associated with harvesting energy from a second signal transmitted during the second on duration, wherein the second downlink control information indicates, by default, the single configuration associated with harvesting energy from a second signal during the second on duration.

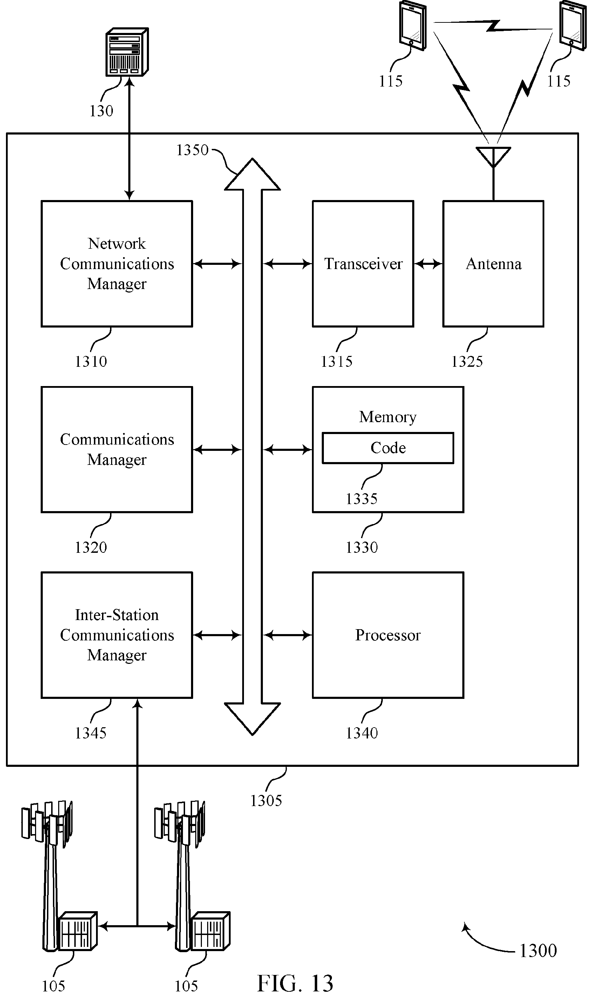

**FIG. 13** shows a diagram of a system 1300 including a device 1305 that supports waking-up a wirelessly-powered device in accordance with aspects of the present disclosure. The device 1305 may be an example of or include the components of a device 1005, a device 1105, a base station 105, or a UE 115 as described herein. The device 1305 may communicate wirelessly with one or more base stations 105, UEs 115, or any combination thereof. The device 1305 may include components for bi-directional voice and data communications including components for transmitting and receiving communications, such as a communications manager 1320, a network communications manager 1310, a transceiver 1315, an antenna 1325, a memory 1330, code 1335, a processor 1340, and an inter-station communications manager 1345. These components may be in electronic communication or otherwise coupled (e.g., operatively, communicatively, functionally, electronically, electrically) via one or more buses (e.g., a bus 1350).

The network communications manager 1310 may manage communications with a core network 130 (e.g., via one or more wired backhaul links). For example, the network communications manager 1310 may manage the transfer of data communications for client devices, such as one or more UEs 115.

In some cases, the device 1305 may include a single antenna 1325. However, in some other cases the device 1305 may have more than one antenna 1325, which may be capable of concurrently transmitting or receiving multiple wireless transmissions. The transceiver 1315 may communicate bi-directionally, via the one or more antennas 1325, wired, or wireless links as described herein. For example, the transceiver 1315 may represent a wireless transceiver and may communicate bi-directionally with another wireless transceiver. The transceiver 1315 may also include a modem to modulate the packets, to provide the modulated packets to one or more antennas 1325 for transmission, and to demodulate packets received from the one or more antennas 1325. The transceiver 1315, or the transceiver 1315 and one or more antennas 1325, may be an example of a transmitter 1015, a transmitter 1115, a receiver 1010, a receiver 1110, or any combination thereof or component thereof, as described herein.

The memory 1330 may include RAM and ROM. The memory 1330 may store computer-readable, computer-executable code 1335 including instructions that, when executed by the processor 1340, cause the device 1305 to perform various functions described herein. The code 1335 may be stored in a non-transitory computer-readable medium such as system memory or another type of memory. In some cases, the code 1335 may not be directly executable by the processor 1340 but may cause a computer (e.g., when compiled and executed) to perform functions described herein. In some cases, the memory 1330 may contain, among other things, a BIOS which may control basic hardware or software operation such as the interaction with peripheral components or devices.

The processor 1340 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some other cases, a memory controller may be integrated into the processor 1340. The processor 1340 may be configured to execute computer-readable instructions stored in a memory (e.g., the memory 1330) to cause the device 1305 to perform various functions (e.g., functions or tasks supporting waking-up a wirelessly-powered device). For example, the device 1305 or a component of the device 1305 may include a processor 1340 and memory 1330 coupled with the processor 1340, the processor 1340 and memory 1330 configured to perform various functions described herein.

The inter-station communications manager 1345 may manage communications with other base stations 105 and may include a controller or scheduler for controlling communications with UEs 115 in cooperation with other base stations 105. For example, the inter-station communications manager 1345 may coordinate scheduling for transmissions to UEs 115 for various interference mitigation techniques such as beamforming or joint transmission. In some examples, the inter-station communications manager 1345 may provide an X2 interface within an LTE/LTE-A wireless communications network technology to provide communication between base stations 105.

Additionally, or alternatively, the communications manager 1320 may support wireless communication at a wireless device in accordance with examples as disclosed herein. For example, the communications manager 1320 may be configured as or otherwise support a means for transmitting, to a UE, a wake-up message including an indicator of whether an on duration of a discontinuous reception cycle is associated with harvesting energy from a signal transmitted in the on duration. The communications manager 1320 may be configured as or otherwise support a means for transmitting the signal during the on duration based on the wake-up message.

By including or configuring the communications manager 1320 in accordance with examples as described herein, the device 1305 may support techniques for the device 1305 to dynamically adjust whether a UE is harvesting energy, decoding data, or both.

In some examples, the communications manager 1320 may be configured to perform various operations (e.g., receiving, monitoring, transmitting) using or otherwise in cooperation with the transceiver 1315, the one or more antennas 1325, or any combination thereof. Although the communications manager 1320 is illustrated as a separate component, in some examples, one or more functions described with reference to the communications manager 1320 may be supported by or performed by the processor 1340, the memory 1330, the code 1335, or any combination thereof. For example, the code 1335 may include instructions executable by the processor 1340 to cause the device 1305 to perform various aspects of waking-up a wirelessly-powered device as described herein, or the processor 1340 and the memory 1330 may be otherwise configured to perform or support such operations.

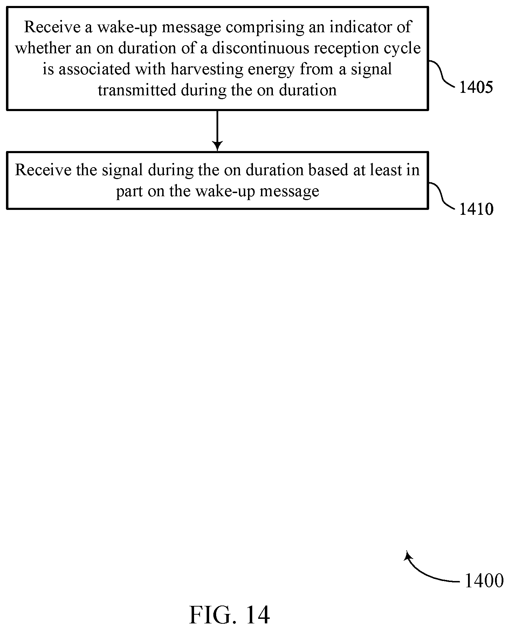

**FIG. 14** shows a flowchart illustrating a method 1400 that supports waking-up a wirelessly-powered device in accordance with aspects of the present disclosure. The operations of the method 1400 may be implemented by a UE or its components as described herein. For example, the operations of the method 1400 may be performed by a UE 115 as described with reference to FIGs. 1 through 9. In some examples, a UE may execute a set of instructions to control the functional elements of the UE to perform the described functions. Additionally, or alternatively, the UE may perform aspects of the described functions using special-purpose hardware.

At 1405, the method may include receiving a wake-up message (e.g., via a PDCCH transmission or a physical downlink shared channel (PDSCH) transmission) including an indicator of whether an on duration of a discontinuous reception cycle is associated with harvesting energy from a signal transmitted during the on duration. In some examples, receiving the wake-up message may include identifying time-frequency resources over which the wake-up message is received; demodulating the wake-up message over those time-frequency resources, and decoding the demodulated wake-up message to obtain bits that include the indicator. The operations of 1405 may be performed in accordance with examples as disclosed herein. In some examples, aspects of the operations of 1405 may be performed by a wake-up message receiver 825 as described with reference to FIG. 8.

At 1410, the method may include receiving the signal (e.g., via a PDSCH transmission or a PDCCH transmission) during the on duration based on the wake-up message. In some examples, receiving the signal may include activating a receiver, a set of receivers, or a receiving antenna panel for the on duration based on the wake-up message and directing the signal to an energy harvester (e.g., an energy harvester 315-a, 315-b, or 315-c as described with reference to FIGs. 3A through 3C) or an information decoder (e.g., an information decoder 320-a, 320-b, or 320-c as described with reference to FIGs. 3A through 3C). The operations of 1410 may be performed in accordance with examples as disclosed herein. In some examples, aspects of the operations of 1410 may be performed by a signal receiver 830 as described with reference to FIG. 8.

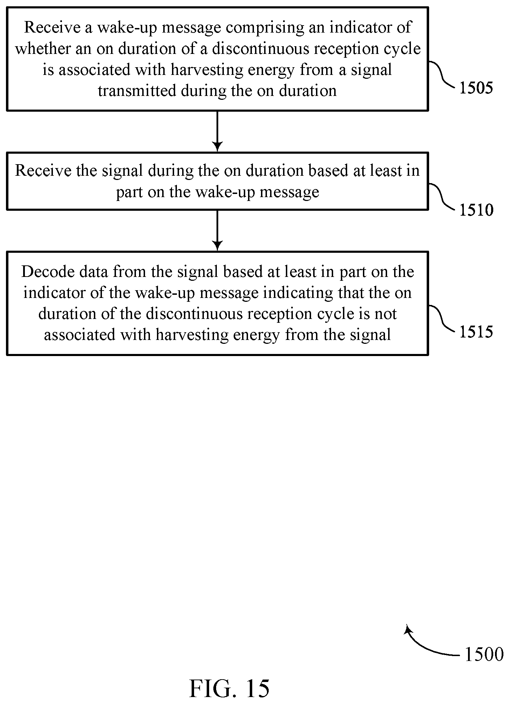

**FIG. 15** shows a flowchart illustrating a method 1500 that supports waking-up a wirelessly-powered device in accordance with aspects of the present disclosure. The operations of the method 1500 may be implemented by a UE or its components as described herein. For example, the operations of the method 1500 may be performed by a UE 115 as described with reference to FIGs. 1 through 9. In some examples, a UE may execute a set of instructions to control the functional elements of the UE to perform the described functions. Additionally, or alternatively, the UE may perform aspects of the described functions using special-purpose hardware.

At 1505, the method may include receiving a wake-up message (e.g., via a PDCCH transmission or a PDSCH transmission) including an indicator of whether an on duration of a discontinuous reception cycle is associated with harvesting energy from a signal transmitted during the on duration. In some examples, receiving the wake-up message may include identifying time-frequency resources over which the wake-up message is received; demodulating the wake-up message over those time-frequency resources, and decoding the demodulated wake-up message to obtain bits that include the indicator. The operations of 1505 may be performed in accordance with examples as disclosed herein. In some examples, aspects of the operations of 1505 may be performed by a wake-up message receiver 825 as described with reference to FIG. 8.

At 1510, the method may include receiving the signal (e.g., via a PDSCH transmission or a PDCCH transmission) during the on duration based on the wake-up message. In some examples, receiving the signal may include activating a receiver, a set of receivers, or a receiving antenna panel for the on duration based on the wake-up message and directing the signal to an energy harvester (e.g., an energy harvester 315-a, 315-b, or 315-c as described with reference to FIGs. 3A through 3C) or an information decoder (e.g., an information decoder 320-a, 320-b, or 320-c as described with reference to FIGs. 3A through 3C). The operations of 1510 may be performed in accordance with examples as disclosed herein. In some examples, aspects of the operations of 1510 may be performed by a signal receiver 830 as described with reference to FIG. 8.

At 1515, the method may include decoding data from the signal based on the indicator of the wake-up message indicating that the on duration of the discontinuous reception cycle is not associated with harvesting energy from the signal. In some examples, decoding the data from the signal may include identifying resources allocated to the UE and associated with the on duration, demodulating the signal over those resources, and extracting a set of bits from the demodulated signal. The operations of 1515 may be performed in accordance with examples as disclosed herein. In some examples, aspects of the operations of 1515 may be performed by a data decoder 835 as described with reference to FIG. 8.

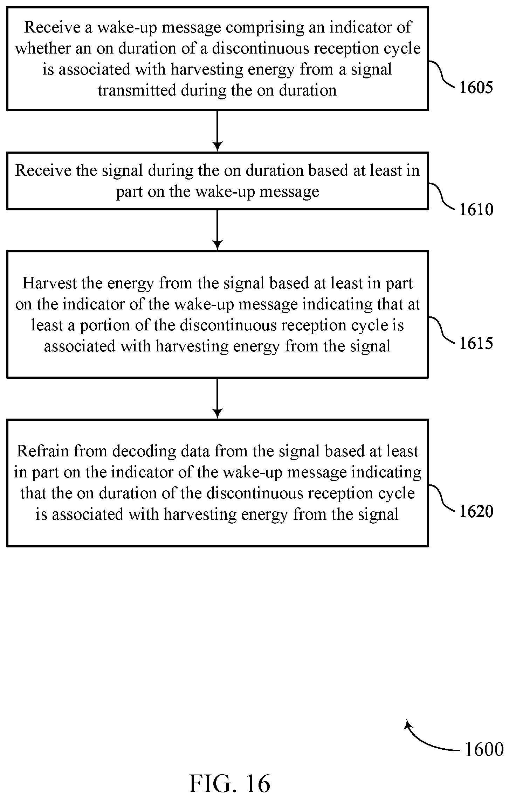

FIG. 16 shows a flowchart illustrating a method 1600 that supports waking-up a wirelessly-powered device in accordance with aspects of the present disclosure. The operations of the method 1600 may be implemented by a UE or its components as described herein. For example, the operations of the method 1600 may be performed by a UE 115 as described with reference to FIGs. 1 through 9. In some examples, a UE may execute a set of instructions to control the functional elements of the UE to perform the described functions. Additionally, or alternatively, the UE may perform aspects of the described functions using special-purpose hardware.

At 1605, the method may include receiving a wake-up message (e.g., via a PDCCH transmission or a PDSCH transmission) including an indicator of whether an on duration of a discontinuous reception cycle is associated with harvesting energy from a signal transmitted during the on duration. In some examples, receiving the wake-up message may include identifying time-frequency resources over which the wake-up message is received; demodulating the wake-up message over those time-frequency resources, and decoding the demodulated wake-up message to obtain bits that include the indicator. The operations of 1605 may be performed in accordance with examples as disclosed herein. In some examples, aspects of the operations of 1605 may be performed by a wake-up message receiver 825 as described with reference to FIG. 8.

At 1610, the method may include receiving the signal (e.g., via a PDSCH transmission or a PDCCH transmission) during the on duration based on the wake-up message. In some examples, receiving the signal may include activating a receiver, a set of receivers, or a receiving antenna panel for the on duration based on the wake-up message and directing the signal to an energy harvester (e.g., an energy harvester 315-a, 315-b, or 315-c as described with reference to FIGs. 3A through 3C) or an information decoder (e.g., an information decoder 320-a, 320-b, or 320-c as described with reference to FIGs. 3A through 3C). The operations of 1610 may be performed in accordance with examples as disclosed herein. In some examples, aspects of the operations of 1610 may be performed by a signal receiver 830 as described with reference to FIG. 8.

At 1615, the method may include harvesting the energy from the signal based on the indicator of the wake-up message indicating that at least a portion of the discontinuous reception cycle is associated with harvesting energy from the signal. In some examples, harvesting the energy may include determining whether to store the energy at a storage device of an energy harvester (e.g., an energy harvester 315-a, 315-b, or 315-c described with reference to FIGs. 3A through 3C) or to use the energy without storing it at the storage device and converting energy of the signal via the energy harvester into power at the device. The operations of 1615 may be performed in accordance with examples as disclosed herein. In some examples, aspects of the operations of 1615 may be performed by an energy harvester 840 as described with reference to FIG. 8.

At 1620, the method may include refraining from decoding data from the signal based on the indicator of the wake-up message indicating that the on duration of the discontinuous reception cycle is associated with harvesting energy from the signal. In some examples, refraining from decoding the data may include directing the signal away from the information decoder (e.g., directing the signal away from the information decoder 320-a, 320-b, or 320-c as described with reference to FIGs. 3A through 3C). The operations of 1620 may be performed in accordance with examples as disclosed herein. In some examples, aspects of the operations of 1620 may be performed by a data decoder 835 as described with reference to FIG. 8.

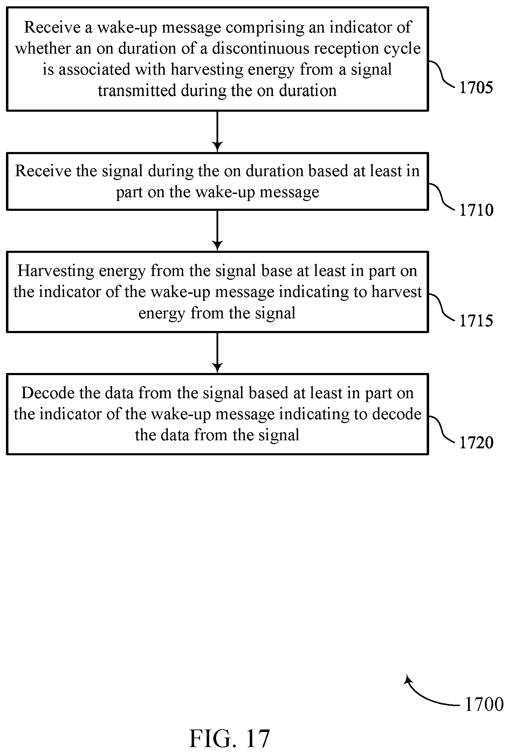

FIG. 17 shows a flowchart illustrating a method 1700 that supports waking-up a wirelessly-powered device in accordance with aspects of the present disclosure. The operations of the method 1700 may be implemented by a UE or its components as described herein. For example, the operations of the method 1700 may be performed by a UE 115 as described with reference to FIGs. 1 through 9. In some examples, a UE may execute a set of instructions to control the functional elements of the UE to perform the described functions. Additionally, or alternatively, the UE may perform aspects of the described functions using special-purpose hardware.

At 1705, the method may include receiving a wake-up message (e.g., via a PDCCH transmission or a PDSCH transmission) including an indicator of whether an on duration of a discontinuous reception cycle is associated with harvesting energy from a signal transmitted during the on duration. In some examples, receiving the wake-up message may include identifying time-frequency resources over which the wake-up message is received; demodulating the wake-up message over those time-frequency resources, and decoding the demodulated wake-up message to obtain bits that include the indicator. The operations of 1705 may be performed in accordance with examples as disclosed herein. In some examples, aspects of the operations of 1705 may be performed by a wake-up message receiver 825 as described with reference to FIG. 8.

At 1710, the method may include receiving the signal (e.g., via a PDSCH transmission or a PDCCH transmission) during the on duration based on the wake-up message. In some examples, receiving the signal may include activating a receiver, a set of receivers, or a receiving antenna panel for the on duration based on the wake-up message and directing the signal to an energy harvester (e.g., an energy harvester 315-a, 315-b, or 315-c as described with reference to FIGs. 3A through 3C) or an information decoder (e.g., an information decoder 320-a, 320-b, or 320-c as described with reference to FIGs. 3A through 3C). The operations of 1710 may be performed in accordance with examples as disclosed herein. In some examples, aspects of the operations of 1710 may be performed by a signal receiver 830 as described with reference to FIG. 8.

At 1715, the method may include harvesting energy from the signal based on the indicator of the wake-up message indicating to harvest energy from the signal. In some examples, harvesting the energy may include determining whether to store the energy at a storage device of an energy harvester (e.g., an energy harvester 315-a, 315-b, or 315-c as described with reference to FIGs. 3A through 3C) or to use the energy without storing it at the storage device and converting the energy of the signal into power via the energy harvester. The operations of 1715 may be performed in accordance with examples as disclosed herein. In some examples, aspects of the operations of 1715 may be performed by an energy harvester 840 as described with reference to FIG. 8.

At 1720, the method may include decoding the data from the signal based on the indicator of the wake-up message indicating to decode the data from the signal. In some examples, decoding the data from the signal may include identifying resources allocated to the UE and associated with the on duration, demodulating the signal over those resources, and extracting a set of bits from the demodulated signal. The operations of 1720 may be performed in accordance with examples as disclosed herein. In some examples, aspects of the operations of 1720 may be performed by a data decoder 835 as described with reference to FIG. 8.

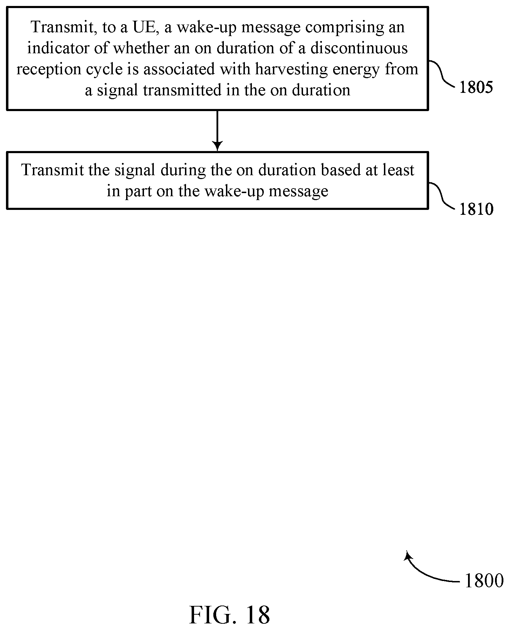

FIG. 18 shows a flowchart illustrating a method 1800 that supports waking-up a wirelessly-powered device in accordance with aspects of the present disclosure. The operations of the method 1800 may be implemented by a wireless device (e.g., a UE, a base station) or its components as described herein. For example, the operations of the method 1800 may be performed by a base station 105 as described with reference to FIGs. 1 through 5 and 10 through 13. In some examples, a base station may execute a set of instructions to control the functional elements of the base station to perform the described functions. Additionally, or alternatively, the base station may perform aspects of the described functions using special-purpose hardware.

At 1805, the method may include transmitting, to a UE, a wake-up message (e.g., via a PDCCH transmission or a PDSCH transmission) including an indicator of whether an on duration of a discontinuous reception cycle is associated with harvesting energy from a signal transmitted in the on duration. In some examples, transmitting the wake-up message may include identifying time-frequency resources over which the wake-up message is transmitted; encoding the wake-up message with one or more bits associated with the indicator; and modulating the wake-up message over the time-frequency resources. The operations of 1805 may be performed in accordance with examples as disclosed herein. In some examples, aspects of the operations of 1805 may be performed by a wake-up message transmitter 1225 as described with reference to FIG. 12.

At 1810, the method may include transmitting the signal (e.g., via a PDCCH transmission or a PDSCH transmission) during the on duration based on the wake-up message. In some examples, transmitting the signal may include identifying when the on duration occurs, determining whether to encode the signal based on whether the wake-up message indicates to decode data, and activating a transmitter, a set of transmitters, or a transmitting antenna panel for the on duration. The operations of 1810 may be performed in accordance with examples as disclosed herein. In some examples, aspects of the operations of 1810 may be performed by a signal transmitter 1230 as described with reference to FIG. 12.

The various operations of methods described herein may be performed by any suitable means capable of performing the corresponding functions. The means may include various hardware and/or software component(s) or module(s), including, but not limited to a circuit, an ASIC, or processor. Generally, where there are operations illustrated in figures, those operations may have corresponding counterpart means-plus-function components.

Means for receiving a wake-up message comprising an indicator of whether an on duration of a discontinuous reception cycle is associated with harvesting energy from a signal transmitted during the on duration may include a processing system, which may include one or more processors, such as the processor 940, or a communications manager of a device illustrated in FIGs. 6-9. Means for receiving the wake-up message may further include the wake-up message receiver 725 illustrated in FIG. 7.

Means for receiving the signal during the on duration based at least in part on the wake-up message may include a processing system, which may include one or more processors, such as the processor 940, or a communications manager of a device illustrated in FIGs. 6-9. Means for receiving the signal may further include the signal receiver 730 illustrated in FIG. 7.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration). A computer-program product may comprise packaging materials to advertise the computer-readable medium therein for purchase by consumers.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. An apparatus (115) for wireless communication, comprising:

   one or more processors (940);
   memory (930) coupled with the one or more processors (940); and
   instructions (935) stored in the memory (930) and executable by the one or more processors (940) to cause the apparatus to obtain (1405; 1505; 1605; 1705) a wake-up message (205; 405), the apparatus **characterized in that**:

   the wake-up message (205; 405) comprises an indicator of whether an on duration (225) of a discontinuous reception cycle (425) is associated with harvesting energy from a signal (210; 215; 415) transmitted during the on duration (225); and
   the instructions (935) are further executable by the one or more processors (940) to cause the apparatus (115) to obtain (1410; 1510; 1610; 1710) the signal (210; 215; 415) during the on duration (225) based at least in part on the wake-up message (205; 405).

2. The apparatus of claim 1, wherein the instructions are further executable by the one or more processors to cause the apparatus to:

decode data from the signal based at least in part on the indicator of the wake-up message indicating that the on duration of the discontinuous reception cycle is not associated with harvesting energy from the signal; or
harvest the energy from the signal based at least in part on the indicator of the wake-up message indicating that at least a portion of the discontinuous reception cycle is associated with harvesting energy from the signal, and refrain from decoding data from the signal based at least in part on the indicator of the wake-up message indicating that the on duration of the discontinuous reception cycle is associated with harvesting energy from the signal; or
harvest energy from the signal based at least in part on the indicator of the wake-up message indicating to harvest energy from the signal, and decode the data from the signal based at least in part on the indicator of the wake-up message indicating to decode the data from the signal, wherein the indicator of the wake-up message indicates to decode data from the signal and to harvest energy from the signal during the on duration.

3. The apparatus of claim 2, wherein:

the instructions to harvest the energy and decode the data are executable by the one or more processors to occur concurrently during at least a portion of the on duration, wherein the instructions to obtain the wake-up message are executable by the one or more processors to cause the apparatus to obtain a parameter in the wake-up message that indicates a fraction of power allocated for harvesting energy during the at least the portion; or
the instructions to harvest the energy are executable by the one or more processors to occur during a first portion of the on duration and the instructions to decode the data are executable by the one or more processors to occur during a second portion of the on duration, the first portion and the second portion being non-overlapping in time, and wherein the instructions to obtain the wake-up message are executable by the one or more processors to cause the apparatus to obtain a parameter in the wake-up message that indicates a first duration of the first portion, a second duration of the second portion, an order of the first portion and the second portion, a gap between the first duration and the second duration, or a combination thereof.

4. The apparatus of claim 1, wherein the instructions are further executable by the one or more processors to cause the apparatus to:
harvest energy from a second signal during a second on duration, decode data from the second signal during the second on duration, or both, independent of obtaining or decoding a second wake-up message associated with the second on duration of a second discontinuous reception cycle.

5. The apparatus of claim 7, wherein the instructions are further executable by the one or more processors to cause the apparatus to:
harvest energy from the second signal during the second on duration, decode data from the second signal during the second on duration, switch to an active state during the second on duration, or perform some combination thereof based at least in part on a first parameter associated with whether the apparatus is to switch to the active state during the second on duration, a second parameter associated with whether to harvest the energy, a third parameter associated with whether to decode the data, a fourth parameter associated with whether to harvest the energy and to decode the data, or any combination thereof.

6. The apparatus of claim 5, wherein the first parameter corresponds to a first probability, the second parameter corresponds to a second probability, the third parameter corresponds to a third probability, and the fourth parameter corresponds to a fourth probability, wherein the instructions to determine whether to harvest the energy, decode the data, or both are executable by the one or more processors to cause the apparatus to:
perform random selection according to a probability distribution to determine whether to remain deactivated during the on duration, to harvest the energy during the on duration, to decode the data during the on duration, or to harvest the energy and to decode the data during the on duration, wherein the probability distribution comprises the first probability, the second probability, the third probability, and the fourth probability.

7. The apparatus of claim 1, wherein the instructions to obtain a wake-up message are executable by the one or more processors to cause the apparatus to:
obtain first downlink control information comprising the indicator of whether the on duration of the discontinuous reception cycle is associated with harvesting energy from the signal transmitted during the on duration.

8. The apparatus of claim 7, wherein the instructions are further executable by the one or more processors to cause the apparatus to:
obtain one or more control messages indicating one or more configurations associated with harvesting energy from the signal transmitted during the on duration, wherein the indicator in the first downlink control information of whether the on duration of the discontinuous reception cycle is associated with harvesting energy from the signal transmitted during the on duration is based at least in part on the one or more configurations indicated in the one or more control messages.

9. The apparatus of claim 8, wherein the one or more control messages indicating the one or more configurations comprise at least one of:

a radio resource control message indicating a set of configurations associated with harvesting energy from the signal transmitted during the on duration; or
a medium access control control element indicating a subset of configurations from the set of configurations associated with harvesting energy from the signal transmitted during the on duration.

10. The apparatus of claim 9, wherein the indicator in the first downlink control information indicates a single configuration from the subset of configurations associated with harvesting energy from the signal transmitted during the on duration, wherein, optionally, the indicator in the first downlink control information indicates, by default, the single configuration associated with harvesting energy from the signal transmitted during the on duration.

11. The apparatus of claim 9, wherein the instructions are further executable by the one or more processors to cause the apparatus to:
obtain second downlink control information indicating a different configuration from the configurations in the subset of configurations associated with harvesting energy from a signal transmitted during a second on duration of a second discontinuous reception cycle.

12. The apparatus of claim 8, wherein the one or more configurations comprise a configuration to harvest energy within one or more frequency ranges in the on duration, a configuration of a fraction of power allocated for harvesting energy in the on duration, a configuration of a first portion of the on duration in which to harvest energy and a second portion of the on duration in which to decode data, a configuration of filters or beams to use for harvesting energy in the on duration, a configuration of the signal from which to harvest energy, or a combination thereof.

13. The apparatus of claim 7, wherein the instructions are further executable by the one or more processors to cause the apparatus to:

obtain second downlink control information indicating whether the apparatus is to switch to an active state or remain in an inactive state during a second on duration of a second discontinuous reception cycle; and either:

decode data from a second signal during the second on duration based at least in part on obtaining the second downlink control information; or:

obtain second downlink control information indicating whether the apparatus is to switch to an active state or remain in an inactive state during a second on duration of a second discontinuous reception cycle; and

harvest energy from a second signal during the second on duration, decode data from the second signal during the second on duration, or both in accordance with a default configuration based at least in part on obtaining the second downlink control information; or:

obtain a control message indicating a single configuration associated with harvesting energy from a second signal transmitted during the second on duration, wherein the second downlink control information indicates, by default, the single configuration associated with harvesting energy from a second signal during the second on duration; and

harvest energy from the second signal during the second on duration, decode data from the second signal during the second on duration, or both based at least in part on the single configuration.

14. An apparatus (202) for wireless communication, comprising:

one or more processors (1340);
memory (1330) coupled with the one or more processors (1340); and
instructions stored in the memory (1330) and executable by the one or more processors (1340) to cause the apparatus (202) to output for transmission (1805; 505), to a user equipment "UE" (115), a wake-up message (205; 405), the apparatus (202) **characterized in that**:

the wake-up message (205; 405) comprises an indicator of whether an on duration (225) of a discontinuous reception cycle (425) is associated with harvesting energy from a signal (210; 215; 415) transmitted in the on duration (225); and
the instructions (1335) are further executable by the one or more processors (1340) to cause the apparatus (202) to output for transmission (1810; 510) the signal (210; 215; 415) during the on duration (225) based at least in part on the wake-up message (205; 405).

15. A method for wireless communication, comprising:
obtaining (1405; 1505; 1605; 1705), or outputting for transmission (1805; 505), a wake-up message (205; 405), the method **characterized in that**:

the wake-up message (205; 405) comprises an indicator of whether an on duration (225) of a discontinuous reception cycle (425) is associated with harvesting energy from a signal (210; 215; 415) transmitted in the on duration (225); and
the method further comprises obtaining (1410; 1510; 1610; 1710), or outputting for transmission (1810; 510), the signal (210; 215; 415) during the on duration (225) based at least in part on the wake-up message (205; 405).

## Patentansprüche

1. Eine Vorrichtung (115) zur drahtlosen Kommunikation, die umfasst:

einen oder mehrere Prozessoren (940);
einen Speicher (930), der mit dem einen oder den mehreren Prozessoren (940) gekoppelt ist; und
Anweisungen (935), die in dem Speicher (930) gespeichert sind und von dem einen oder den mehreren Prozessoren (940) ausführbar sind, um die Vorrichtung zu veranlassen, eine Wecknachricht (205; 405) zu erlangen (1405; 1505; 1605; 1705), wobei die Vorrichtung **dadurch gekennzeichnet ist, dass**:
die Wecknachricht (205; 405) einen Indikator dafür umfasst, ob eine Einschaltdauer (225) eines diskontinuierlichen Empfangszyklus (425) mit einem Gewinnen bzw. Sammeln von Energie aus einem während der Einschaltdauer (225) gesendeten Signal (210; 215; 415) assoziiert ist; und
die Anweisungen (935) weiter von dem einen oder den mehreren Prozessoren (940) ausführbar sind, um die Vorrichtung (115) zu veranlassen, das Signal (210; 215; 415) während der Einschaltdauer (225) basierend zumindest teilweise auf der Wecknachricht (205; 405) zu erlangen (1410; 1510; 1610; 1710).

2. Die Vorrichtung gemäß Anspruch 1, wobei die Anweisungen weiter von dem einen oder den mehreren Prozessoren ausführbar sind, um die Vorrichtung zu veranlassen zum:

Decodieren von Daten aus dem Signal basierend zumindest teilweise darauf, dass der Indikator der Wecknachricht angibt, dass die Einschaltdauer des diskontinuierlichen Empfangszyklus nicht mit einem Gewinnen von Energie aus dem Signal assoziiert ist; oder
Gewinnen der Energie aus dem Signal basierend zumindest teilweise darauf, dass der Indikator der Wecknachricht angibt, dass zumindest ein Teil des diskontinuierlichen Empfangszyklus mit dem Gewinnen von Energie aus dem Signal assoziiert ist, und Absehen von einem Decodieren von Daten aus dem Signal basierend zumindest teilweise darauf, dass der Indikator der Wecknachricht angibt, dass die Einschaltdauer des diskontinuierlichen Empfangszyklus mit einem Gewinnen von Energie aus dem Signal assoziiert ist; oder
Gewinnen von Energie aus dem Signal basierend zumindest teilweise darauf, dass der Indikator der Wecknachricht angibt, Energie aus dem Signal zu gewinnen, und Decodieren der Daten aus dem Signal basierend zumindest teilweise darauf, dass der Indikator der Wecknachricht angibt, die Daten aus dem Signal zu decodieren, wobei der Indikator der Wecknachricht angibt, Daten aus dem Signal zu decodieren und Energie aus dem Signal zu gewinnen während der Einschaltdauer.

3.  Die Vorrichtung gemäß Anspruch 2, wobei:

die Anweisungen zum Gewinnen der Energie und Decodieren der Daten von dem einen oder den mehreren Prozessoren ausführbar sind, um gleichzeitig während zumindest eines Teils der Einschaltdauer zu erfolgen, wobei die Anweisungen zum Erlangen der Wecknachricht von dem einen oder den mehreren Prozessoren ausführbar sind, um die Vorrichtung zu veranlassen, einen Parameter in der Wecknachricht zu erlangen, der einen Anteil von Leistung angibt, der zum Gewinnen von Energie während des zumindest Teils zugewiesen ist; oder
die Anweisungen zum Gewinnen der Energie von dem einen oder den mehreren Prozessoren ausführbar sind, um während eines ersten Teils der Einschaltdauer zu erfolgen, und die Anweisungen zum Decodieren der Daten von dem einen oder den mehreren Prozessoren ausführbar sind, um während eines zweiten Teils der Einschaltdauer zu erfolgen, wobei der erste Teil und der zweite Teil zeitlich nicht überlappen, und wobei die Anweisungen zum Erlangen der Wecknachricht von dem einen oder den mehreren Prozessoren ausführbar sind, um die Vorrichtung zu veranlassen, einen Parameter in der Wecknachricht zu erlangen, der eine erste Dauer des ersten Teils, eine zweite Dauer des zweiten Teils, eine Reihenfolge des ersten Teils und des zweiten Teils, eine Lücke zwischen der ersten Dauer und der zweiten Dauer oder eine Kombination davon angibt.

4.  Die Vorrichtung gemäß Anspruch 1, wobei die Anweisungen weiter von dem einen oder den mehreren Prozessoren ausführbar sind, um die Vorrichtung zu veranlassen zum:
Gewinnen von Energie aus einem zweiten Signal während einer zweiten Einschaltdauer, Decodieren von Daten aus dem zweiten Signal während der zweiten Einschaltdauer, oder beides, unabhängig von einem Erlangen oder Decodieren einer zweiten Wecknachricht, die mit der zweiten Einschaltdauer eines zweiten diskontinuierlichen Empfangszyklus assoziiert ist.

5.  Die Vorrichtung gemäß Anspruch 7, wobei die Anweisungen weiter von dem einen oder den mehreren Prozessoren ausführbar sind, um die Vorrichtung zu veranlassen zum:
Gewinnen von Energie aus dem zweiten Signal während der zweiten Einschaltdauer, Decodieren von Daten aus dem zweiten Signal während der zweiten Einschaltdauer, Wechseln in einen aktiven Zustand während der zweiten Einschaltdauer, oder Durchführen einer Kombination davon basierend zumindest teilweise auf einem ersten Parameter, der damit assoziiert ist, ob die Vorrichtung in den aktiven Zustand wechseln soll während der zweiten Einschaltdauer, einem zweiten Parameter, der damit assoziiert ist, ob die Energie zu gewinnen ist, einem dritten Parameter, der damit assoziiert ist, ob die Daten zu decodieren sind, einem vierten Parameter, der damit assoziiert ist, ob die Energie zu gewinnen ist und die Daten zu decodieren sind, oder einer Kombination davon.

6.  Die Vorrichtung gemäß Anspruch 5, wobei der erste Parameter einer ersten Wahrscheinlichkeit entspricht, der zweite Parameter einer zweiten Wahrscheinlichkeit entspricht, der dritte Parameter einer dritten Wahrscheinlichkeit entspricht und der vierte Parameter einer vierten Wahrscheinlichkeit entspricht, wobei die Anweisungen zum Bestimmen, ob die Energie zu gewinnen ist, die Daten zu decodieren sind oder beides, von dem einen oder den mehreren Prozessoren ausführbar sind, um die Vorrichtung zu veranlassen zum:
Durchführen einer zufälligen Auswahl gemäß einer Wahrscheinlichkeitsverteilung, um zu bestimmen, ob während der Einschaltdauer deaktiviert zu bleiben ist, die Energie zu gewinnen ist während der Einschaltdauer, die Daten zu decodieren sind während der Einschaltdauer, oder die Energie zu gewinnen ist und die Daten zu decodieren sind während der Einschaltdauer, wobei die Wahrscheinlichkeitsverteilung die erste Wahrscheinlichkeit, die zweite Wahrscheinlichkeit, die dritte Wahrscheinlichkeit und die vierte Wahrscheinlichkeit umfasst.

7. Die Vorrichtung gemäß Anspruch 1, wobei die Anweisungen zum Erlangen einer Wecknachricht von dem einen oder den mehreren Prozessoren ausführbar sind, um die Vorrichtung zu veranlassen zum: Erlangen von erster Abwärtsstrecke- bzw. Downlink-Steuerinformation, die den Indikator dafür umfasst, ob die Einschaltdauer des diskontinuierlichen Empfangszyklus mit einem Gewinnen von Energie aus dem während der Einschaltdauer gesendeten Signal assoziiert ist.

8. Die Vorrichtung gemäß Anspruch 7, wobei die Anweisungen weiter von dem einen oder den mehreren Prozessoren ausführbar sind, um die Vorrichtung zu veranlassen zum: Erlangen einer oder mehrere Steuernachrichten, die eine oder mehrere Konfigurationen angeben, die mit dem Gewinnen von Energie aus dem während der Einschaltdauer gesendeten Signal assoziiert sind, wobei der Indikator in der ersten Downlink-Steuerinformation darüber, ob die Einschaltdauer des diskontinuierlichen Empfangszyklus mit dem Gewinnen von Energie aus dem während der Einschaltdauer gesendeten Signal assoziiert ist, zumindest teilweise auf der einen oder mehreren Konfigurationen basiert, die in der einen oder mehreren Steuernachrichten angegeben sind.

9. Die Vorrichtung gemäß Anspruch 8, wobei die eine oder mehreren Steuernachrichten, die die eine oder mehreren Konfigurationen angeben, zumindest eines umfassen aus:

eine Funkressourcensteuernachricht, die einen Satz von Konfigurationen angibt, die mit dem Gewinnen von Energie aus dem während der Einschaltdauer gesendeten Signal assoziiert sind; oder ein Medienzugriffssteuerung-Steuerelement, das einen Teilsatz von Konfigurationen aus dem Satz von Konfigurationen angibt, die mit dem Gewinnen von Energie aus dem während der Einschaltdauer gesendeten Signal assoziiert sind.

10. Die Vorrichtung gemäß Anspruch 9, wobei der Indikator in der ersten Downlink-Steuerinformation eine einzelne Konfiguration aus dem Teilsatz von Konfigurationen angibt, die mit dem Gewinnen von Energie aus dem während der Einschaltdauer gesendeten Signal assoziiert sind, wobei optional der Indikator in der ersten Downlink-Steuerinformation standardmäßig die einzelne Konfiguration angibt, die mit dem Gewinnen von Energie aus dem während der Einschaltdauer gesendeten Signal assoziiert ist.

11. Die Vorrichtung gemäß Anspruch 9, wobei die Anweisungen weiter von dem einen oder den mehreren Prozessoren ausführbar sind, um die Vorrichtung zu veranlassen zum: Erlangen von zweiter Downlink-Steuerinformation, die eine andere Konfiguration als die Konfigurationen in dem Teilsatz der Konfigurationen angibt, die mit dem Gewinnen von Energie aus einem während einer zweiten Einschaltdauer eines zweiten diskontinuierlichen Empfangszyklus gesendeten Signal assoziiert sind.

12. Die Vorrichtung gemäß Anspruch 8, wobei die eine oder mehreren Konfigurationen eine Konfiguration zum Gewinnen von Energie innerhalb eines oder mehrerer Frequenzbereiche während der Einschaltdauer, eine Konfiguration eines für zum Gewinnen von Energie während der Einschaltdauer zugewiesenen Leistungsanteils, eine Konfiguration eines ersten Teils der Einschaltdauer zum Gewinnen von Energie und eines zweiten Teils der Einschaltdauer zum Decodieren von Daten, eine Konfiguration von Filtern oder Strahlen zur Verwendung zum Gewinnen von Energie während der Einschaltdauer, eine Konfiguration des Signals, aus dem die Energie zu gewinnen ist, oder eine Kombination davon umfassen.

13. Die Vorrichtung gemäß Anspruch 7, wobei die Anweisungen weiter von dem einen oder den mehreren Prozessoren ausführbar sind, um die Vorrichtung zu veranlassen zum: Erlangen von zweiter Downlink-Steuerinformation, die angibt, ob die Vorrichtung in einen aktiven Zustand wechseln soll oder in einem inaktiven Zustand verbleiben soll während einer zweiten Einschaltdauer eines zweiten diskontinuierlichen Empfangszyklus; und entweder: Decodieren von Daten aus einem zweiten Signal während der zweiten Einschaltdauer basierend zumindest teilweise auf dem Erlangen der zweiten Downlink-Steuerinformation; oder:

Erlangen von zweiter Downlink-Steuerinformation, die angibt, ob die Vorrichtung in einen aktiven Zustand wechseln soll oder in einem inaktiven Zustand verbleiben soll während einer zweiten Einschaltdauer eines zweiten diskontinuierlichen Empfangszyklus; und Gewinnen von Energie aus einem zweiten Signal während der zweiten Einschaltdauer, Decodieren von Daten aus dem zweiten Signal während der zweiten Einschaltdauer oder beides gemäß einer Standardkonfiguration basierend zumindest teilweise auf dem Erlangen der zweiten Downlink-Steuerinformation; oder:

Erlangen einer Steuernachricht, die eine einzelne Konfiguration angibt, die mit dem Gewinnen von Energie aus einem zweiten Signal assoziiert ist, das während der zweiten Einschaltdauer gesendet wird, wobei die zweiten Downlink-Steuerinformation standardmäßig die einzelne Konfiguration angibt, die mit dem Gewinnen von Energie aus einem zweiten Signal während der zweiten Einschaltdauer assoziiert ist; und Gewinnen von Energie aus dem zweiten Signal während der zweiten Einschaltdauer, Decodieren von Daten aus dem zweiten Signal während der zweiten Einschaltdauer oder beides basierend zumindest teilweise auf der einzelnen Konfiguration.

14. Eine Vorrichtung (202) zur drahtlosen Kommunikation, die umfasst:

einen oder mehrere Prozessoren (1340); einen Speicher (1330), der mit dem einen oder den mehreren Prozessoren (1340) gekoppelt ist; und Anweisungen, die in dem Speicher (1330) gespeichert sind und von dem einen oder den mehreren Prozessoren (1340) ausführbar sind, um die Vorrichtung (202) zu veranlassen, eine Wecknachricht (205; 405) zur Übertragung (1805; 505) an eine Benutzereinrichtung bzw. UE (user equipment) (115) auszugeben, wobei die Vorrichtung (202) **dadurch gekennzeichnet ist, dass**:

die Wecknachricht (205; 405) einen Indikator umfasst, der angibt, ob eine Einschaltdauer (225) eines diskontinuierlichen Empfangszyklus (425) mit einem Gewinnen bzw. Sammeln von Energie aus einem während der Einschaltdauer (225) gesendeten Signal (210; 215; 415) assoziiert ist; und die Anweisungen (1335) weiter von dem einen oder den mehreren Prozessoren (1340) ausführbar sind, um die Vorrichtung (202) zu veranlassen, das Signal (210; 215; 415) während der Einschaltdauer (225) basierend zumindest teilweise auf der Wecknachricht (205; 405) zur Übertragung (1810; 510) auszugeben.

15. Ein Verfahren zur drahtlosen Kommunikation, das umfasst:
Erlangen (1405; 1505; 1605; 1705) oder Ausgeben zur Übertragung (1805; 505) einer Wecknachricht (205; 405), wobei das Verfahren **dadurch gekennzeichnet ist, dass**:

die Wecknachricht (205; 405) einen Indikator dafür umfasst, ob eine Einschaltdauer (225) eines diskontinuierlichen Empfangszyklus (425) mit einem Gewinnen bzw. Sammeln von Energie aus einem während der Einschaltdauer (225) gesendeten Signal (210; 215; 415) assoziiert ist; und das Verfahren weiter umfasst ein Erlangen (1410; 1510; 1610; 1710) oder Ausgeben zur Übertragung (1810; 510) des Signals (210; 215; 415) während der Einschaltdauer (225) basierend zumindest teilweise auf der Wecknachricht (205; 405).

## Revendications

1. Appareil (115) de communication sans fil, comprenant :

un ou plusieurs processeurs (940) ; une mémoire (930) couplée au ou aux processeurs (940) ; et des instructions (935) stockées dans la mémoire (930) et exécutables par le ou les processeurs (940) pour amener l'appareil à obtenir (1405 ; 1505 ; 1605 ; 1705) un message de réveil (205 ; 405), l'appareil étant **caractérisé en ce que** :

le message de réveil (205 ; 405) comprend un indicateur indiquant si une durée d'activation (225) d'un cycle de réception discontinue (425) est associée à une récupération d'énergie d'un signal (210 ; 215 ; 415) émis pendant la durée d'activation (225) ; et les instructions (935) étant en outre exécutables par le ou les processeurs (940) pour amener l'appareil (115) à obtenir (1410 ; 1510 ; 1610 ; 1710) le signal (210 ; 215 ; 415) pendant la durée d'activation (225) sur la base, au moins en partie, du message de réveil (205 ; 405).

2. Appareil selon la revendication 1, les instructions étant en outre exécutables par le ou les processeurs pour amener l'appareil à :

décoder des données du signal sur la base, au moins en partie, du fait que l'indicateur du message de réveil indique que la durée d'activation du cycle de réception discontinue n'est pas associée à une récupération d'énergie du signal ; ou récupérer l'énergie du signal sur la base, au moins en partie, du fait que l'indicateur du message de réveil indique qu'au moins une partie du cycle de réception discontinue est associée à une récupération d'énergie du signal, et s'abstenir de décoder des données du signal sur la base, au moins en partie, du fait que l'indicateur du message de réveil indique que la durée d'activation du cycle de réception discontinue est associée à une récupération d'énergie du signal ; ou

récupérer de l'énergie du signal sur la base, au moins en partie, du fait que l'indicateur du message de réveil indique de récupérer de l'énergie du signal, et décoder les données du signal sur la base, au moins en partie, du fait que l'indicateur du message de réveil indique de décoder les données du signal, l'indicateur du message de réveil indiquant de décoder des données du signal et de récupérer de l'énergie du signal pendant la durée d'activation.

3. Appareil selon la revendication 2,

les instructions pour récupérer l'énergie et décoder les données étant exécutables par le ou les processeurs de telle sorte que l'exécution se produise simultanément pendant au moins une partie de la durée d'activation, les instructions pour obtenir le message de réveil étant exécutables par le ou les processeurs pour amener l'appareil à obtenir un paramètre dans le message de réveil qui indique une fraction de puissance allouée pour récupérer de l'énergie pendant l'au moins une partie ; ou

les instructions pour récupérer l'énergie étant exécutables par le ou les processeurs de telle sorte que l'exécution se produise pendant une première partie de la durée d'activation et les instructions pour décoder les données étant exécutables par le ou les processeurs de telle sorte que l'exécution se produise pendant une seconde partie de la durée d'activation, la première partie et la seconde partie ne se chevauchant pas dans le temps, et les instructions pour obtenir le message de réveil étant exécutables par le ou les processeurs pour amener l'appareil à obtenir un paramètre dans le message de réveil qui indique une première durée de la première partie, une seconde durée de la seconde partie, un ordre de la première partie et de la seconde partie, un écart entre la première durée et la seconde durée, ou une combinaison correspondante.

4. Appareil selon la revendication 1, les instructions étant en outre exécutables par le ou les processeurs pour amener l'appareil à :
récupérer de l'énergie d'un second signal pendant une seconde durée d'activation et/ou décoder des données du second signal pendant la seconde durée d'activation, indépendamment de l'obtention ou du décodage d'un second message de réveil associé à la seconde durée d'activation d'un second cycle de réception discontinue.

5. Appareil selon la revendication 7, les instructions étant en outre exécutables par le ou les processeurs pour amener l'appareil à :
récupérer de l'énergie du second signal pendant la seconde durée d'activation, décoder des données du second signal pendant la seconde durée d'activation, commuter dans un état actif pendant la seconde durée d'activation ou réaliser une certaine combinaison correspondante sur la base, au moins en partie, d'un premier paramètre associé à la nécessité ou non pour l'appareil de commuter dans l'état actif pendant la seconde durée d'activation, d'un deuxième paramètre associé à la nécessité ou non de récupérer l'énergie, d'un troisième paramètre associé à la nécessité ou non de décoder les données, d'un quatrième paramètre associé à la nécessité ou non de récupérer l'énergie et de décoder les données, ou d'une quelconque combinaison correspondante.

6. Appareil selon la revendication 5, le premier paramètre correspondant à une première probabilité, le deuxième paramètre correspondant à une deuxième probabilité, le troisième paramètre correspondant à une troisième probabilité et le quatrième paramètre correspondant à une quatrième probabilité, les instructions pour déterminer s'il faut récupérer l'énergie et/ou décoder les données étant exécutables par le ou les processeurs pour amener l'appareil à :
réaliser une sélection aléatoire selon une distribution de probabilités pour déterminer s'il doit rester désactivé pendant la durée d'activation, récupérer l'énergie pendant la durée d'activation, décoder les données pendant la durée d'activation ou récupérer l'énergie et décoder les données pendant la durée d'activation, la distribution de probabilités comprenant la première probabilité, la deuxième probabilité, la troisième probabilité et la quatrième probabilité.

7. Appareil selon la revendication 1, les instructions pour obtenir un message de réveil étant exécutables par le ou les processeurs pour amener l'appareil à :
obtenir des premières informations de commande en liaison descendante comprenant l'indicateur indiquant si la durée d'activation du cycle de réception discontinue est associée à une récupération d'énergie du signal émis pendant la durée d'activation.

8. Appareil selon la revendication 7, les instructions étant en outre exécutables par le ou les processeurs pour amener l'appareil à :

obtenir un ou plusieurs messages de commande indiquant une ou plusieurs configurations associées à une récupération d'énergie du signal émis pendant la durée d'activation, l'indicateur dans les premières informations de commande en liaison descendante indiquant si la durée d'activation du cycle de réception discontinue est associée à une récupération d'énergie du signal émis pendant la durée d'activation étant basé, au moins en partie, sur la ou les configurations indiquées dans le ou les messages de commande.

9. Appareil selon la revendication 8, le ou les messages de commande indiquant la ou les configurations comprenant au moins un élément parmi :

un message de contrôle des ressources radio indiquant un ensemble de configurations associées à une récupération d'énergie du signal émis pendant la durée d'activation ; ou un élément de commande de contrôle d'accès au support indiquant un sous-ensemble de configurations de l'ensemble de configurations associées à une récupération d'énergie du signal émis pendant la durée d'activation.

10. Appareil selon la revendication 9, l'indicateur dans les premières informations de commande en liaison descendante indiquant une configuration unique du sous-ensemble de configurations associées à une récupération d'énergie du signal émis pendant la durée d'activation, éventuellement l'indicateur dans les premières informations de commande en liaison descendante indiquant, par défaut, la configuration unique associée à une récupération d'énergie du signal émis pendant la durée d'activation.

11. Appareil selon la revendication 9, les instructions étant en outre exécutables par le ou les processeurs pour amener l'appareil à :

obtenir des secondes informations de commande en liaison descendante indiquant une configuration différente des configurations du sous-ensemble de configurations associées à une récupération d'énergie d'un signal émis pendant une seconde durée d'activation d'un second cycle de réception discontinue.

12. Appareil selon la revendication 8, la ou les configurations comprenant une configuration pour récupérer de l'énergie dans une ou plusieurs plages de fréquences pendant la durée d'activation, une configuration d'une fraction de puissance allouée pour récupérer de l'énergie pendant la durée d'activation, une configuration d'une première partie de la durée d'activation pendant laquelle récupérer de l'énergie et une seconde partie de la durée d'activation pendant laquelle décoder des données, une configuration de filtres ou de faisceaux à utiliser pour récupérer de l'énergie pendant la durée d'activation, une configuration du signal duquel récupérer de l'énergie, ou une combinaison correspondante.

13. Appareil selon la revendication 7, les instructions étant en outre exécutables par le ou les processeurs pour amener l'appareil à :

obtenir des secondes informations de commande en liaison descendante indiquant si l'appareil doit commuter dans un état actif ou rester dans un état inactif pendant une seconde durée d'un second cycle de réception discontinue ; et :

décoder des données d'un second signal pendant la seconde durée d'activation sur la base, au moins en partie, de l'obtention des secondes informations de commande en liaison descendante ; ou :

obtenir des secondes informations de commande en liaison descendante indiquant si l'appareil doit commuter dans un état actif ou rester dans un état inactif pendant une seconde durée d'un second cycle de réception discontinue ; et récupérer de l'énergie d'un second signal pendant la seconde durée d'activation et/ou décoder des données du second signal pendant la seconde durée d'activation, selon une configuration par défaut sur la base, au moins en partie, de l'obtention des secondes informations de commande en liaison descendante ; ou :

obtenir un message de commande indiquant une configuration unique associée à une récupération d'énergie d'un second signal émis pendant la seconde durée d'activation, les secondes informations de commande en liaison descendante indiquant, par défaut, la configuration unique associée à une récupération d'énergie d'un second signal pendant la seconde durée d'activation ; et récupérer de l'énergie du second signal pendant la seconde durée d'activation et/ou décoder des données du second signal pendant la seconde durée d'activation, sur la base, au moins en partie, de la configuration unique.

14. Appareil (202) de communication sans fil, comprenant :

un ou plusieurs processeurs (1340) ; une mémoire (1330) couplée au ou aux processeurs (1340) ; et des instructions stockées dans la mémoire (1330) et exécutables par le ou les processeurs (1340) pour amener l'appareil (202) à délivrer en sortie pour émission (1805 ; 505), vers un équipement d'utilisateur « UE » (115), un message de réveil (205 ; 405), l'appareil (202) étant **caractérisé en ce que** :

le message de réveil (205 ; 405) comprend un indicateur indiquant si une durée d'activation (225) d'un cycle de réception discontinue (425) est associée à une récupération d'énergie d'un signal (210 ; 215 ; 415) émis pendant la durée d'activation (225) ; et les instructions (1335) étant en outre exécutables par le ou les processeurs (1340) pour amener l'appareil (202) à délivrer en sortie pour émission (1810 ; 510) le signal (210 ; 215 ; 415) pendant la durée d'activation (225) sur la base, au moins en partie, du message de réveil (205 ; 405).

15. Procédé de communication sans fil, comprenant l'étape consistant à :
obtenir (1405 ; 1505 ; 1605 ; 1705), ou délivrer en sortie pour émission (1805 ; 505), un message de réveil (205 ; 405), le procédé étant **caractérisé en ce que** :

le message de réveil (205 ; 405) comprend un indicateur indiquant si une durée d'activation (225) d'un cycle de réception discontinue (425) est associée à une récupération d'énergie d'un signal (210 ; 215 ; 415) émis pendant la durée d'activation (225) ; et le procédé comprenant en outre l'étape consistant à obtenir (1410 ; 1510 ; 1610 ; 1710), ou à délivrer en sortie pour émission (1810 ; 510), le signal (210 ; 215 ; 415) pendant la durée d'activation (225) sur la base, au moins en partie, du message de réveil (205 ; 405).

FIG. 1

EP 4 349 078 B1

FIG. 2

305-a

315-a

310-a

Energy Harvester

Information
Decoder

320-a

FIG. 3A

300-a

305-b

315-b

310-b

Energy Harvester

Information
Decoder

320-b

FIG. 3B

300-b

305-c

315-c

305-d

Energy Harvester

Information
Decoder

320-c

FIG. 3C

300-c

FIG. 4A

FIG. 4B

FIG. 4C

115-b

202-b

Wireless
Device

Wake-Up Message

505

Signal

510

515

Harvest
Energy

520

Decode
Data

500

FIG. 5

Receiver

610

Communications Manager

620

Transmitter

615

605

600

FIG. 6

Communications Manager

Wake-Up Message Receiver

725

Receiver

710

Signal Receiver

730

720

Transmitter

715

705

700

FIG. 7

Wake-Up Message Receiver

825

Data Decoder

835

WUS Failure Determination Component

845

Signal Decision Component

855

Signal Receiver

830

Energy Harvester

840

Parameter Receiver

850

Control Message Receiver

860

820

800

FIG. 8

I/O Controller

910

Communications
Manager

920

Transceiver

915

Antenna

925

Memory

Code

935

930

Processor

940

945

905

900

FIG. 9

| Receiver | | Communications Manager | | Transmitter |
|---|---|---|---|---|

1010                    1020                    1015

1005

1000

FIG. 10

FIG. 11

FIG. 12

FIG. 13

Receive a wake-up message comprising an indicator of whether an on duration of a discontinuous reception cycle is associated with harvesting energy from a signal transmitted during the on duration

1405

Receive the signal during the on duration based at least in part on the wake-up message

1410

1400

FIG. 14

Receive a wake-up message comprising an indicator of whether an on duration of a discontinuous reception cycle is associated with harvesting energy from a signal transmitted during the on duration

1505

Receive the signal during the on duration based at least in part on the wake-up message

1510

Decode data from the signal based at least in part on the indicator of the wake-up message indicating that the on duration of the discontinuous reception cycle is not associated with harvesting energy from the signal

1515

1500

FIG. 15

Receive a wake-up message comprising an indicator of whether an on duration of a discontinuous reception cycle is associated with harvesting energy from a signal transmitted during the on duration

1605

Receive the signal during the on duration based at least in part on the wake-up message

1610

Harvest the energy from the signal based at least in part on the indicator of the wake-up message indicating that at least a portion of the discontinuous reception cycle is associated with harvesting energy from the signal

1615

Refrain from decoding data from the signal based at least in part on the indicator of the wake-up message indicating that the on duration of the discontinuous reception cycle is associated with harvesting energy from the signal

1620

1600

FIG. 16

Receive a wake-up message comprising an indicator of whether an on duration of a discontinuous reception cycle is associated with harvesting energy from a signal transmitted during the on duration

1705

Receive the signal during the on duration based at least in part on the wake-up message

1710

Harvesting energy from the signal base at least in part on the indicator of the wake-up message indicating to harvest energy from the signal

1715

Decode the data from the signal based at least in part on the indicator of the wake-up message indicating to decode the data from the signal

1720

1700

FIG. 17

Transmit, to a UE, a wake-up message comprising an
indicator of whether an on duration of a discontinuous
reception cycle is associated with harvesting energy from
a signal transmitted in the on duration

1805

Transmit the signal during the on duration based at least
in part on the wake-up message

1810

1800

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020037247 A1
- WO 2019108940 A1